# EUROPÄISCHE PATENTSCHRIFT

(11) **EP 3 909 789 B1**
(45) Veröffentlichungstag und Bekanntmachung des Hinweises auf die Patenterteilung: **21.12.2022**
(21) Anmeldenummer: 21173986.7
(22) Anmeldetag: 15.05.2021
(51) Int. Cl.: B60C 11/03, B60C 13/02

(54) **LAUFRADKOMPONENTE INSBESONDERE FÜR FAHRRÄDER**
IMPELLER COMPONENT, IN PARTICULAR FOR BICYCLES
COMPOSANTS DE ROUE PORTEUSE, EN PARTICULIER POUR BICYCLETTES

(30) Priorität: 15.05.2020 DE 102020113270
(43) Veröffentlichungstag der Anmeldung: 17.11.2021
(73) Patentinhaber: DT Swiss AG, 2504 Biel (CH)
(72) Erfinder: Ballard, Jean-Paul Victor, CH-8800 Thalwil (CH); Jayaraman, Matthew, CH-8057 Zürich (CH); Hugentobler, Simon, CH-3097 Liebefeld (CH); Walthert, Martin, CH-3270 Aarberg (CH)
(74) Vertreter: BSB Patentanwälte Schütte & Engelen Partnerschaft mbB

(56) Entgegenhaltungen:
- EP-A1- 2 662 227
- CA-A1- 2 902 079
- CN-A- 103 987 540
- CN-U- 202 742 997
- US-A1- 2002 157 748

## Beschreibung

Die vorliegende Erfindung betrifft eine Laufradkomponente für wenigstens teilweise muskelbetriebene Fahrzeuge wie Fahrräder und insbesondere Sport- und Rennräder, wobei die Laufradkomponente einen ringförmigen Reifen mit einer Lauffläche aufweist, die im bestimmungsgemäßen Gebrauch bei einer Geradeausfahrt auf einem ebenen Untergrund in Kontakt mit einer Oberfläche des Untergrundes gerät.

Im Stand der Technik sind verschiedenste Laufradkomponenten bekannt geworden, mit denen verbesserte aerodynamische Eigenschaften der Laufräder von Fahrrädern erzielt werden. Gerade im Amateurbereich und im semiprofessionellen und professionellen des Fahrradsports wird viel Forschungsaufwand und Energie in die Verbesserung von Fahrradkomponenten gesteckt. So wird regelmäßig versucht, das Gewicht von Fahrradkomponenten zu verringern. Gleichzeitig soll die Stabilität verbessert und die Effizienz gesteigert werden.

Neben einer Verringerung des Gewichts der beteiligten Komponenten ist ein wichtiger Ansatz die Verbesserung der Aerodynamik. Bei hohen Fahrgeschwindigkeiten ist der aerodynamische Fahrwiderstand der wesentlichste Widerstand. Deshalb wurde in vergangenen Jahren ein erheblicher Forschungsaufwand betrieben, um die unterschiedlichen Komponenten eines Fahrrads aerodynamischer zu gestalten.

Im Stand der Technik sind Laufräder von Fahrrädern bekannt geworden, bei denen bestimmte Kombinationen aus Felge, Speichen, Naben und Reifen verbesserte aerodynamische Eigenschaften haben. Es hat sich herausgestellt, dass die vorteilhaften Eigenschaften oft nur in bestimmten Kombinationen aus Nabe, Reifen, Speichen und Felgen erzielt werden, und dass zudem auch dann nicht immer dauerhaft die gewünschten Ergebnisse erzielt werden.

Mit der EP 2 662 227 A1 ist ein ringförmiger Reifen für Rennräder mit den Merkmalen des Oberbegriffs von Anspruch 1 bekannt geworden. Der Reifen weist eine erste glatte Zone als Lauffläche und benachbart dazu zwei ringförmige Zwischenbänder auf, welche sich auf beiden Seiten der ersten glatten Zone erstrecken, wobei auf den Zwischenbändern Unebenheiten ausgebildet sind. Die Unebenheiten sind über der vollständigen Fläche der Zwischenbänder verteilt angeordnet. Die Unebenheiten umfassen viele nach außen abstehende Elemente und linienförmige Vertiefungen, die auch nachteilige Verwirbelungen auslösen können.

Es ist deshalb die Aufgabe der vorliegenden Erfindung, eine Laufradkomponente zur Verfügung zu stellen, womit beim Betrieb insgesamt zuverlässig und reproduzierbar verbesserte aerodynamische Eigenschaften erzielbar sind. Die verbesserten aerodynamischen Eigenschaften sollen insbesondere nicht nur bei Höchstgeschwindigkeiten, sondern auch bei mittleren und geringeren Geschwindigkeiten wirksam sein. Dabei soll insbesondere auch der Einsatz unterschiedlicher Kombinationen von Reifen, Felgen etc. ermöglicht werden.

Diese Aufgabe wird gelöst durch eine erfindungsgemäße Laufradkomponente mit den Merkmalen des Anspruchs 1 und/oder des Anspruchs 15. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Laufradkomponente gemäß Anspruch 1 ist für im bestimmungsgemäßen Gebrauch regelmäßig wenigstens teilweise muskelbetriebene Fahrzeuge wie Fahrräder und insbesondere für Sport- und Rennräder vorgesehen und umfasst einen ringförmigen Reifen mit einer in einem zentralen Winkelsegment ausgebildeten Lauffläche und sich seitlich daran anschließenden Seitenflächen. Die Lauffläche des ringförmigen Reifens gerät im bestimmungsgemäßen Gebrauch bei einer Geradeausfahrt auf einem ebenen Untergrund wenigstens teilweise (umlaufend) in Kontakt mit der Oberfläche des Untergrundes. Die Lauffläche spannt eine zentrale und insbesondere mittlere oder auch außermittige Längsschnittebene des Reifens auf. An der Oberfläche des ringförmigen Reifens sind Aeroelemente ausgebildet. Die Aeroelemente sind seitlich beabstandet von der Längsschnittebene ausgebildet. Die Aeroelemente sind jeweils flächig und sind (wenigstens überwiegend oder nahezu alle oder alle) als Vertiefung in der Oberfläche des Reifens ausgebildet und sind auf den Seitenflächen angeordnet. Die Aeroelemente definieren auf den Seitenflächen umlaufende Winkelbänder, wobei ein Winkelband als Ring ausgebildet ist, welches radial innen und radial außen durch die radiale Ausdehnung der Aeroelemente definiert wird. Ein Flächenanteil der Aeroelemente an der Fläche eines Winkelbandes ist größer 5% und ist kleiner als 25%. Wenigstens ein Aeroelement weist eine kantige Struktur auf, bei der wenigstens zwei in Radialrichtung verlaufende Seitenwände einen Winkel zur Oberfläche größer 60° aufweisen und wobei wenigstens eine in Umfangsrichtung verlaufende geneigte Seitenwand ausgebildet ist, die im Wesentlichen einen Winkel von weniger als 45° zur Oberfläche aufweist.

Eine erfindungsgemäße Laufradkomponente gemäß Anspruch 15 ist für im bestimmungsgemäßen Gebrauch regelmäßig wenigstens teilweise muskelbetriebene Fahrzeuge wie Fahrräder und insbesondere für Sport- und Rennräder vorgesehen und umfasst einen ringförmigen Reifen mit einer in einem zentralen Winkelsegment ausgebildeten Lauffläche und sich seitlich daran anschließenden Seitenflächen. Die Lauffläche des ringförmigen Reifens gerät im bestimmungsgemäßen Gebrauch bei einer Geradeausfahrt auf einem ebenen Untergrund wenigstens teilweise (umlaufend) in Kontakt mit der Oberfläche des Untergrundes. Die Lauffläche spannt eine zentrale und insbesondere mittlere oder auch außermittige Längsschnittebene des Reifens auf. An der Oberfläche des ringförmigen Reifens sind Aeroelemente ausgebildet. Die Aeroelemente sind seitlich beabstandet von der Längsschnittebene ausgebildet. Die Aeroelemente sind jeweils flächig und sind als Vertiefung in der Oberfläche des Reifens ausgebildet und sind auf den Seitenflächen angeordnet. Die Aeroelemente definieren auf den Seitenflächen umlaufende Winkelbänder, wobei ein Winkelband als Ring ausgebildet ist, welches radial innen und radial außen durch die radiale Ausdehnung der Aeroelemente definiert wird. Ein Flächenanteil der Aeroelemente an der Fläche eines Winkelbandes ist größer 5% und ist kleiner als 25%. Ein maximaler Höhenunterschied eines Aeroelementes zur umgebenden Oberfläche ist wenigstens zweimal so groß ist wie ein maximaler Höhenunterschied innerhalb des Winkelbandes außerhalb der Aeroelemente. Die Lauffläche und die Oberfläche des Winkelbandes sind abgesehen von den Aeroelementen profillos ausgebildet.

Diese erfindungsgemäße Laufradkomponente haben viele Vorteile. Ein erheblicher Vorteil ist die einfache Ausgestaltung. Es hat sich herausgestellt, das mit einer relativ geringen Anzahl von Aeroelementen zur Verwirbelung der anströmenden Luft sehr vorteilhafte aerodynamische Eigenschaften erzielt werden. Durch flächig ausgebildete Aeroelemente reicht ein sehr geringer Flächenanteil aus, um auch bei relativ niedrigen Geschwindigkeiten eine hohe Effektivität zu erreichen. Die hohe Effektivität bleibt aber bei hohen Geschwindigkeiten erhalten.

Die erfindungsgemäße Ausgestaltung wurde im Rahmen aufwendiger Windkanaltests optimiert, wobei gerade eine geringe Anzahl großflächiger Aeroelemente zu einem sehr guten Ergebnis geführt hat. Das schlägt sich in dem geringen Flächenanteil der Aeroelemente von dem Winkelband nieder. Im Stand der Technik wurde versucht, möglichst viele aerodynamisch wirksame Elemente einzusetzen. Dadurch wird die effektive Oberflächenrauheit erhöht und tatsächlich wurde im Vergleich zur Erfindung die Effektivität verringert. Gerade bei mittleren Geschwindigkeiten von 37,5 km/h kann erfindungsgemäß schon in vielen Situationen ein Segeleffekt ausgenutzt werden, bei dem schräg von vorne anströmende Luft ausgenutzt wird, um einen Vortrieb zu erzeugen.

Die Erfindung ermöglicht einen solchen Segeleffekt nicht nur bei hohen (Relativ-) Geschwindigkeiten von 45 km/h oder mehr, sondern auch schon bei mittleren Geschwindigkeiten von 37,5 km/h und sogar bei geringen Geschwindigkeiten von 30 km/h. Das ist schwierig zu erreichen und wurde bei keinem untersuchten Wettbewerbsprodukt erreicht.

Die Winkelbänder können dabei insbesondere radial nach innen und radial nach außen durch die radial innersten Abschnitte der flächigen Aeroelemente und durch die radial äußersten Abschnitte der flächigen Aeroelemente begrenzt werden. Die Aeroelemente sind besonders bevorzugt nicht oder nahezu nicht auf der Lauffläche ausgebildet, sodass die Lauffläche im Wesentlichen oder insbesondere vollständig frei von Aeroelementen ist.

Eine seitliche Projektion eines Winkelbandes bildet insbesondere einen Kreisring. Das Winkelband selbst erstreckt sich auf der gekrümmten Fläche des Reifens.

Vorzugsweise wird das Winkelband radial nach innen durch einen zum Reifen zentrischen Kreis auf der Oberfläche begrenzt, der direkt an die radial innerste Stelle der Aeroelemente angrenzt. Das Winkelband wird insbesondere radial nach außen durch einen zum Reifen zentrischen Kreis auf der Oberfläche begrenzt, der direkt an die radial äußerste Stelle der Aeroelemente angrenzt.

In einer bevorzugten Ausgestaltung wird das Winkelband auf einer Seite des Reifens radial nach außen durch eine konzentrische kreisförmige Linie begrenzt, bei der wenigstens 95% oder 99% der Fläche der Aeroelemente auf dieser Seite des Reifens radial innerhalb liegt. Vorzugsweise wird dann das Winkelband radial nach innen durch eine konzentrische kreisförmige Linie begrenzt, bei der wenigstens 95% oder 99% der Fläche der Aeroelemente auf dieser Seite des Reifens radial außerhalb liegt. Dann liegen wenigstens 90% der Fläche der Aeroelemente auf dieser Seite des Reifens in dem Winkelband. Entsprechendes gilt für die andere Seite des Reifens auf der gegenüberliegenden Seite der Längsschnittebene.

Es kann hilfreich sein, wenn die Oberfläche des Reifens abgesehen von den Aeroelementen weitgehend oder sogar weitestgehend glatt ausgebildet ist. Es sind nur seitlich beabstandet von der Längsschnittebene Aeroelemente ausgebildet. Dadurch kann eine aerodynamisch besonders günstige Laufradkomponente zur Verfügung gestellt werden.

Vorzugsweise weist die Oberfläche des Reifens eine geringe Rauheit auf. Insbesondere ist ein Mittenrauwert Ra auf wenigstens 90% der Fläche und insbesondere wenigstens 95% und vorzugsweise wenigstens 97,5% oder 99% oder 99,5% der im Betrieb sichtbaren Oberfläche des Reifens kleiner als 100 µm und vorzugsweise kleiner als 50 µm und kann auch kleiner als 25 µm betragen. Insbesondere ist die gemittelte Rautiefe Rz (auf entsprechenden Flächenanteilen) kleiner 150 µm und vorzugsweise kleiner als 100 µm. Eine Rautiefe Rt, definiert als Differenz aus maximalem und minimalem Wert der Oberflächenabweichung, ist (auf entsprechenden und insbesondere den zuvor angeführten Flächenanteilen) insbesondere kleiner 200 µm und vorzugsweise kleiner als 100 µm. Die Aeroelemente sind nicht als Rauheit anzusehen, sondern bilden eine Struktur, wobei vorzugweise jedes oder nahezu jedes Aeroelement in sich wiederum vorzugsweise entsprechend glatt ausgebildet ist und eine Rautiefe Rt von insbesondere kleiner 200 µm und vorzugsweise kleiner als 100 µm aufweist.

Es hat sich überraschenderweise herausgestellt, dass einzelne und voneinander getrennte und explizit unterscheidbare und flächig ausgebildete Aeroelemente auf der Oberfläche des Reifens und seitlich beabstandet von der Längsschnittebene auf einfache und sehr effektive Weise die Aerodynamik des Reifens erheblich verbessern.

Die Lauffläche ist insbesondere kontinuierlich auf dem Umfang der Laufradkomponente ausgebildet, sodass auf dem kreisförmigen Umfang an der zentralen Längsschnittebene jeder Abschnitt des Umfangs mit einem ebenen Untergrund in Kontakt gerät. Es ist möglich, aber nicht nötig und vielen Ausgestaltungen auch nicht der Fall, dass die komplette Breite der Lauffläche in Kontakt mit einem Untergrund gerät. Es kann sein, dass im Laufe des Betriebs alle Breitenbereiche der Lauffläche bei Kurvenfahrten in Kontakt mit dem Untergrund kommen. Es kann aber auch sein, dass Breitenbereiche der Lauffläche niemals in Kontakt mit dem Untergrund kommen.

In allen Ausgestaltungen ist es besonders bevorzugt, dass diskrete Aeroelemente ausgebildet sind. Die Aeroelemente sind insbesondere voneinander separiert und jeweils von einem Stück oder Abschnitt einer unprofilierten und/oder weitestgehend glatten Oberfläche des Reifens getrennt. Insbesondere sind die trennenden Abschnitte oder Flächen (jeweils mehrfach) größer als die Aeroelemente.

Vorzugsweise ist jedes Aeroelement separat ausgebildet, sodass die Aeroelemente weder teilweise noch insgesamt als durchgängige Elemente ausgebildet sind. Vorzugsweise ist jedes Aeroelement separat auf der Oberfläche ausgebildet und räumlich getrennt von dem nächsten Aeroelement.

Vorzugsweise ist ein Abstand von einem Aeroelement zum nächsten Aeroelement in Umfangsrichtung größer als eine Länge des Aeroelements in Umfangsrichtung. Besonders bevorzugt ist ein Abstand von einem Aeroelement zum nächsten Aeroelement größer als eine maximale Abmessung des Aeroelements.

Möglich ist es auch, dass ein oder auch jedes Aeroelement durch zwei, drei oder vier oder mehr Abschnitte gebildet wird, die insgesamt ein diskretes und separat ausgebildetes Aeroelement auf der Oberfläche des Reifens bilden.

Besonders bevorzugt ist ein Flächenanteil der Aeroelemente an der im bestimmungsgemäßen Gebrauch sichtbaren Oberfläche oder sogar an der gesamten Oberfläche des Reifens größer 1 oder 2% und beträgt vorzugsweise weniger als 6% oder 8%. Vorzugsweise liegt ein Flächenanteil der Aeroelemente an der im bestimmungsgemäßen Gebrauch sichtbaren Oberfläche zwischen 2,5% und 5%. Vorzugsweise liegt ein Flächenanteil der Aeroelemente an der gesamten Oberfläche des Reifens zwischen 2% und 5%. Es hat sich überraschender Weise herausgestellt, dass dieser niedrige Flächenanteil sehr effektiv ist und sehr positive aerodynamische Eigenschaften hervorruft.

Insbesondere umfasst jedes Aeroelement zwischen 0,01% und 0,1% der im bestimmungsgemäßen Gebrauch sichtbaren Oberfläche oder der gesamten Oberfläche des Reifens. Insbesondere weist ein oder jedes (flächige) Aeroelement einen Flächenanteil von zwischen 0,02% und 0,05% oder 0,06% der im bestimmungsgemäßen Gebrauch sichtbaren Oberfläche oder der gesamten Oberfläche des Reifens auf. Unter der im bestimmungsgemäßen Gebrauch sichtbaren Oberfläche wird im Falle von Drahtreifen oder Faltreifen oder dergleichen die äußere Oberfläche des Reifens zwischen seinen Reifenwülsten verstanden. In einem konkreten Beispiel beträgt die äußere Oberfläche des Reifens zwischen den Reifenwülsten etwa 135.000 Quadratmillimeter. Das entspricht im bestimmungsgemäßen Gebrauch der sichtbaren Oberfläche. Ein Aeroelement mit 0,04% Flächenanteil weist dann eine Fläche von 54 Quadratmillimetern auf. Besonders bevorzugt weisen die Aeroelemente (alle oder nahezu alle oder im Wesentlichen alle) jeweils eine kompakte und kantige Struktur auf. Insbesondere ist wenigstens ein Seitenwandabschnitt der Mehrzahl der Aeroelemente oder aller Aeroelemente steil ausgebildet und weist vorzugsweise einen Winkel größer 60° und insbesondere größer 75° (oder 80° oder 85°) zur umfänglichen Oberfläche auf. Dieser Winkel ist laut der Erfindung nach Anspruch 1 größer als 60°.

Bevorzugt ist es, dass die Aeroelemente eine etwa rechteckige Struktur aufweisen. Vorzugsweise sind wenigstens zwei Seitenwandabschnitte des Aeroelements steil ausgebildet. Insbesondere sind wenigstens die Seitenwandabschnitte in radialer Richtung steil ausgebildet. Es ist möglich, dass alle Seitenwandabschnitte steil ausgebildet sind.

Bevorzugt ist wenigstens ein Seitenwandabschnitt des Aeroelements in radialer Richtung steiler ausgebildet als ein Seitenwandabschnitt in Umfangsrichtung der Lauffläche. Besonders bevorzugt sind zwei Seitenwandabschnitte des Aeroelements in radialer Richtung steiler ausgebildet ist als ein Seitenwandabschnitt in Umfangsrichtung der Lauffläche.

Besonders bevorzugt sind die Seitenwandabschnitte in radialer Richtung steiler als in einer Umfangsrichtung ausgebildet. In der anderen Umfangsrichtung kann ein Seitenwandabschnitt ebenfalls steiler ausgebildet sein.

Vorzugsweise ist ein maximaler Höhenunterschied eines Aeroelementes zur umgebenden Oberfläche wenigstens zweimal oder dreimal so groß wie ein maximaler Höhenunterschied innerhalb des Winkelbandes außerhalb der Aeroelemente. Der maximale Höhenunterschied eines Aeroelements ist laut der Erfindung nach Anspruch 15 wenigstens zwei mal so groß wie ein maximaler Höhenunterschied innerhalb des Winkelbandes außerhalb der Aeroelemente.

Besonders bevorzugt sind wenigstens die Lauffläche und die Oberfläche des Winkelbandes abgesehen von den Aeroelementen profillos und/oder flach ausgebildet.

Es ist bevorzugt, dass die gesamte Oberfläche des Reifens abgesehen von den Aeroelementen im bestimmungsgemäßen Gebrauch weitgehend oder sogar weitestgehend profillos und/oder flach ausgebildet ist.

Insbesondere sind die Lauffläche und die Oberfläche des Winkelbandes und/oder die Oberfläche des Reifens insgesamt abgesehen von den Aeroelementen im bestimmungsgemäßen Gebrauch weitestgehend glatt ausgebildet ist. Unebenheiten, wie sie sich im normalen Produktionsprozess ergeben (und vorzugsweise auch Unebenheiten mit einer zwei oder dreifachen Amplitude) werden dabei insbesondere noch als weitestgehend glatt angesehen.

In bevorzugten Weiterbildungen ist auf dem Umfang der Lauffläche wenigstens eine Indikatoreinheit ausgebildet, um ein aerodynamisches Qualitätsmaß oder eine aerodynamische Qualitätsstufe oder eine aerodynamische Qualitätskennzahl des Reifens anzuzeigen. Möglich ist es auch, dass auf dem Umfang der Lauffläche wenigstens ein Verschleißerkennungselement umfasst ist, um ein Maß für einen Verschleiß des Reifens und dessen Auswirkungen auf die Aerodynamik anzuzeigen.

Ausgestaltungen, bei denen eine Indikatoreinheit eingesetzt wird, um eine Art von aerodynamischen Qualitätsmaß oder dergleichen anzuzeigen, sind sehr vorteilhaft, da dem Benutzer dadurch direkt ein eindeutiges Kriterium zur Hand gegeben wird, um in wichtigen Situationen den Reifen vor Gebrauch auszutauschen. Bei einem normalen Training ist es nicht so wichtig, ob die Laufradkomponente höchsten aerodynamischen Anforderungen genügt, aber bei einem wichtigen Rennen kommt es auf jedes Detail an.

In allen Ausgestaltungen ist es besonders bevorzugt, dass an der Oberfläche des ringförmigen Reifens mehr als 10 oder 20 und weniger als 400 (oder 1000) (diskrete und/oder voneinander separate) Aeroelemente ausgebildet sind. Besonders bevorzugt sind zwischen 40 und 400 Aeroelemente auf der Oberfläche des ringförmigen Reifens vorgesehen. Besonders bevorzugt sind in jedem Winkelband zwischen 20 und 100 Aeroelemente auf der Oberfläche des ringförmigen Reifens ausgebildet.

In besonders bevorzugten Weiterbildungen sind auf beiden Seiten der Längsschnittebene Aeroelemente ausgebildet. Vorzugsweise ist auf jeweils beiden Seiten der Längsschnittebene jeweils genau ein Winkelband vorgesehen. Insbesondere ist auf jeder Seite der Längsschnittebene eine Anzahl von zwischen 10 und 200 Aeroelementen ausgebildet. Vorzugsweise sind zwischen 15 und 100 Aeroelemente pro Seite ausgebildet. In besonders bevorzugten Ausgestaltungen sind zwischen 25 und 75 Aeroelemente auf wenigstens einer Seite und insbesondere auf jeweils beiden Seiten vorgesehen.

In einer konkreten und sehr vorteilhaften Ausgestaltung sind 48 (50 +/-5) Aeroelemente auf jeder Seite ausgebildet. Damit wurden sehr gute Ergebnisse erzielt, bessere als mit einer deutlich größeren Anzahl.

Besonders bevorzugt sind zwei axial benachbarte Aeroelemente auf den beiden Seiten der Längsschnittebene in Umfangsrichtung versetzt zueinander ausgerichtet.

Besonders bevorzugt sind die Aeroelemente auf wenigstens einer Seite und insbesondere auf beiden Seiten jeweils symmetrisch über dem jeweiligen Umfang verteilt angeordnet. Insbesondere sind die Aeroelemente auf den jeweiligen Seiten versetzt zueinander ausgerichtet, wobei die Aeroelemente auf der einen Seite winkelmäßig genau zwischen den Aeroelementen auf der anderen Seite angeordnet sind.

Besonders bevorzugt weist wenigstens ein Aeroelement eine radiale Erstreckung zwischen 0,25 mm und 2 mm auf. Besonders bevorzugt weist ein Aeroelement eine radiale Erstreckung zwischen 0,35 mm und 1,5 mm oder 2 mm und in bevorzugten Weiterbildungen zwischen 0,4 mm und 1,5 mm oder 2 mm und insbesondere zwischen 0,5 mm und 1,2 mm auf.

In einer konkreten Ausgestaltung beträgt eine radiale Erstreckung etwa 0,75 mm (+/- 0,05 mm). Eine radiale Erstreckung von 0,75 mm und insbesondere von 1 mm hat sich als sehr positiv herausgestellt. Unter einer radialen Erstreckung wird der Unterschied der Höhe bzw. Tiefe gegenüber der umgebenden Oberfläche des Aeroelements verstanden.

Es ist besonders bevorzugt, dass die Aeroelemente als Vertiefungen auf der Oberfläche des Reifens ausgebildet sind. Möglich ist es aber auch, dass die Aeroelemente von der Oberfläche des Reifens aus nach außen abstehen und somit als Erhöhungen ausgebildet sind. Ein erheblicher Vorteil von Vertiefungen ist, dass der Querschnitt der Anströmungsfläche und damit der Windwiderstand geringer ist, als wenn die Aeroelemente als Erhöhungen ausgebildet sind. Möglich ist aber auch eine Kombination, bei der einzelne Aeroelemente als Vertiefungen und einzelne Aeroelemente als Erhöhung ausgebildet sind. Besonders bevorzugt sind alle Aeroelemente jeweils als Vertiefung ausgebildet.

In bevorzugten Weiterbildungen weist wenigstens ein Aeroelement eine Länge auf der Oberfläche quer zu dem Umfang der Lauffläche zwischen 2 mm und 16 mm auf. Unter einer Länge auf der Oberfläche wird insbesondere die Länge entlang der Oberfläche und entlang der Wölbung, also die Bogenlänge verstanden. Unter einer Länge auf der Oberfläche quer zu dem Umfang der Lauffläche wird insbesondere die Länge in axialer Richtung entlang der Oberfläche der Wölbung, also die Bogenlänge des Reifens verstanden.

Besonders bevorzugt weist wenigstens ein Aeroelement und insbesondere weisen nahezu alle Aeroelemente oder alle Aeroelemente eine Länge auf der Oberfläche quer zu dem Umfang der Lauffläche zwischen 3 mm und 15 mm und insbesondere zwischen 4 mm und 12 mm und besonders bevorzugt zwischen 6 mm und 10 mm auf. Insbesondere beträgt die Länge auf der Oberfläche quer zu dem Umfang der Lauffläche zwischen 7 und 9 mm und in einer konkreten Ausgestaltung beträgt sie (etwa) 8 mm.

Vorzugsweise weist wenigstens ein Aeroelement und insbesondere weisen nahezu alle Aeroelemente oder alle Aeroelemente eine Länge auf der Oberfläche in Umfangsrichtung zwischen 3 mm und 20 mm und vorzugsweise zwischen 4 mm und 15 mm und insbesondere zwischen 3 mm und 15 mm und besonders bevorzugt zwischen 6 mm und 10 mm oder zwischen 4 mm und 9 mm auf. In einer konkreten Ausgestaltung beträgt eine Länge eines Aeroelements auf der Oberfläche in Umfangsrichtung etwa 6-7 mm. Unter dem Begriff "nahezu alle" wird im Sinne dieser Anmeldung wenigstens 90% oder 95% verstanden.

Der Boden der Aeroelemente ist insbesondere flächig und (weitgehend) eben gestaltet.

Vorzugsweise weist wenigstens ein Aeroelement oder es weisen eine Vielzahl der Aeroelemente oder nahezu alle oder alle Aeroelemente eine radial äußere Oberfläche auf dem Reifen zwischen 10 mm² und 200 mm² (Quadratmillimeter) auf. Vorzugsweise beträgt die radial äußere Oberfläche der Aeroelemente jeweils zwischen 15 mm² und 100 mm² und besonders bevorzugt zwischen 20 mm² und 70 mm². In einem konkreten Fall liegt die äußere Oberfläche eines Aeroelements bzw. der Aeroelemente jeweils zwischen 40 mm² und 60 mm² bei etwa 48 mm² oder 56 mm². Dabei hat sich eine radiale Erstreckung von 8 mm und eine Erstreckung in Umfangsrichtung von 6 mm bis 7 mm als sehr positiv herausgestellt.

In allen Ausgestaltungen ist es bevorzugt, dass wenigstens ein Aeroelement eine taschen-, topf- oder wannenartige Struktur aufweist. Eine solche und z. B. topfartige Struktur kann an allen Rändern eine steile Wandung mit Winkeln von 70° oder 80° oder mehr oder 90° aufweisen. Es ist möglich und bevorzugt, dass alle Wände eine Steigung größer 70° oder größer 80° oder größer 85° aufweisen.

Es ist möglich und bevorzugt, dass wenigstens ein Aeroelement und insbesondere z. B. ein Drittel, die Hälfte oder auch alle Aeroelemente eine weitgehend homogene Vertiefung mit steilen Wänden ausbilden. Der Bodenbereich des Aeroelementes weist dann vorzugsweise eine Fläche zwischen 20 mm² und 81 mm² auf.

Besonders bevorzugt weist wenigstens ein Aeroelement und insbesondere z. B. ein Drittel, die Hälfte oder auch alle Aeroelemente eine wannenartige Struktur auf, bei der einzelne Wände sehr steil und wenigstens eine Wand flacher ausgebildet ist. Beispielsweise können die radial innen und radial außen verlaufenden Wände steiler ausgebildet sein, während genau eine oder wenigstens eine sich in Umfangsrichtung erstreckende Wand flacher ausgebildet ist. Es ist bevorzugt, dass sich eine in Umfangsrichtung erstreckende Wand steil ausgebildet ist und einen Winkel größer 70° oder 80° oder größer 85° zur Oberfläche aufweist. Vorzugsweise ist die flacher verlaufende Wand nach vorne ausgerichtet, wenn das Aeroelement sich am oberen Ende des Reifens weit entfernt von dem Boden befindet.

Es hat sich herausgestellt, dass mit einer topf- und/oder wannenartigen Struktur und einzelnen diskreten Aeroelementen eine erhebliche Verbesserung der aerodynamischen Eigenschaften des Reifens und der Laufradkomponente erzielt werden können.

In einer konkreten bevorzugten Ausgestaltung sind die Aeroelemente (wenigstens im Wesentlichen alle oder nahezu alle oder) alle wannenförmig ausgebildet und weisen einen weitgehend ebenen Bodenbereich auf, an den sich eine in Umfangsrichtung der Laufradkomponente ansteigende flachere Flanke anschließt. Besonders bevorzugt ist das Aeroelement (etwa) rechteckig geformt und der Bodenbereich weist über eine Fläche von zwischen 15 mm² und 40 mm² eine Tiefe größer 0,3 mm auf. Vorzugsweise beträgt eine Tiefe mehr als 0,6 mm über mehr als 7 mm oder 90% der radialen Höhe und über eine Länge in Umfangsrichtung von mehr als 2 mm.

In allen Ausgestaltungen weist wenigstens ein Aeroelement oder es weisen wenigstens im Wesentlichen alle oder nahezu alle oder alle vorzugsweise eine kompakte Struktur auf, bei der ein Verhältnis von maximaler Ausdehnung zu minimaler Ausdehnung auf der Oberfläche des Reifens kleiner 6 und insbesondere kleiner 5 beträgt. Vorzugsweise ist das Verhältnis von maximaler Ausdehnung zu minimaler Ausdehnung auf der Oberfläche des Reifens (größer 1 und) kleiner 4 oder 3. Besonders bevorzugt ist das Verhältnis kleiner 2. Die größere Ausdehnung erstreckt sich vorzugsweise quer zur Umfangsrichtung der Laufradkomponente und besonders bevorzugt nahezu radial oder radial.

Vorzugsweise liegt ein Verhältnis von maximaler Länge eines Aeroelementes in Umfangsrichtung der Laufradkomponente zu maximaler Länge in Querrichtung (z. B. radial) dazu zwischen 1/3 und 3/1 und insbesondere zwischen 1/2 und 2/1 und besonders bevorzugt zwischen 3/5 und 5/3. Durch derartige Verhältnisse der maximalen Ausdehnung und der maximalen Länge werden sehr kompakte Strukturen von Aeroelementen definiert, die diskret und separat voneinander auf der Oberfläche des Reifens ausgebildet sind.

In vorteilhaften Weiterbildungen weist wenigstens ein Aeroelement eine kantige Struktur auf, bei der wenigstens 2 oder 3 Seitenwände ein Winkel zur Oberfläche größer 60° und insbesondere größer 70°, 75° oder größer 80° aufweisen. Besonders bevorzugt weist wenigstens ein Aeroelement eine in Umfangsrichtung verlaufende geneigte Seitenwand auf, die im Wesentlichen einen Winkel von weniger als 50° oder 45° oder weniger als 40° oder 30° zu Oberfläche aufweist. In bevorzugten Ausgestaltungen sind 3 steile(re) Wände und eine flache(re) Wand vorgesehen, bei der sich insbesondere insgesamt eine etwa wannenartige Struktur des Aeroelements ergibt.

Besonders bevorzugt weist der Reifen auf der im bestimmungsgemäßen Gebrauch sichtbaren Oberfläche abgesehen von den Aeroelementen und etwaigen Indikatoreinheiten keine Erhebungen oder Vertiefungen auf, die eine größere radiale Erstreckung aufweisen als eine auf der Oberfläche vorhandene Typangabe. Meist ist eine Typangabe auf der Oberfläche gesetzlich vorgeschrieben, wobei sich die Zeichen der Typangabe von der umgebenden Oberfläche radial nach außen absetzen. Dabei ist es möglich, dass auf der gesamten Oberfläche oder auf Teilen der Oberfläche leichte Schwankungen bzw. leichte Vertiefungen und Erhöhungen ausgebildet sind, die sich durch den Produktionsprozess ergeben oder die auch beabsichtigt sind, um die Griffigkeit zu erhöhen, die aber eine geringere radiale Erstreckung aufweisen als die Typangabe auf der Oberfläche. Eine Typangabe umfasst insbesondere auch den empfohlenen oder maximal vorgesehenen Luftdruck. Die Typangabe entspricht den jeweiligen nötigen gesetzlichen Anforderungen, die von Land zu Land unterschiedlich sein können. Insbesondere sind die Zeichen wenigstens oder genau 3,2 mm hoch ausgebildet.

Vorzugsweise ist der Reifen auf der im bestimmungsgemäßen Gebrauch sichtbaren Oberfläche abgesehen von den Aeroelementen und etwaigen Indikatoreinheiten und einer etwaigen Typangabe (im Wesentlichen) unprofiliert oder profillos und vorzugsweise wenigstens im Wesentlichen oder vollständig glatt ausgebildet. Eine unprofilierte Oberfläche ist insbesondere eine Oberfläche, die nicht gezielt und bewusst geplante Oberflächenstrukturen mit einer maximalen radialen Erstreckung größer 0,25 mm aufweist. Vorzugsweise wird unter einer profillosen oder unprofilierten Oberfläche eine glatte Oberfläche verstanden. Es kann aber z. B. im Produktionsprozess vorkommen oder bewusst angestrebt werden, dass regelmäßig oder unregelmäßig kleinere Vertiefungen und Erhöhungen auftreten.

Vorzugsweise beträgt ein maximaler Höhenunterschied auf der im bestimmungsgemäßen Gebrauch sichtbaren Oberfläche abgesehen von den Aeroelementen, der wenigstens einen Indikatoreinheit und einer etwaigen Typangabe weniger als 0,35 mm oder weniger als 0,2 mm. Ein Aspekt dabei ist, dass durch die Aeroelemente gezielte Turbulenzen an der Oberfläche ausgelöst werden, während die Oberfläche an sich möglichst glatt ausgebildet ist und wenig Reibung erzeugt.

Insbesondere ist wenigstens eine Typangabe umfasst, welche durch lokale Erhebungen ausgebildet ist. Bevorzugt stehen die Zeichen der Typangabe um wenigstens oder genau 3,2 mm über die umgebende Oberfläche nach außen ab. Eine Typangabe ist insbesondere auf der Seitenfläche außerhalb der Winkelbänder ausgebildet.

In allen Ausgestaltungen ist es bevorzugt, dass der Reifen als Clincher bzw. Drahtreifen oder Faltreifen ausgebildet ist. Vorzugsweise weist der Reifen umlaufende Reifenwülste auf. In den Reifenwülsten bzw. in dem Reifen können Verstärkungsringe und/oder Verstärkungsringabschnitte und/oder Drahtringe umfasst sein. Möglich und besonders bevorzugt ist es aber auch, dass der Reifen als tubeless-Reifen ausgebildet ist und ohne den Einsatz eines Schlauches eingesetzt werden kann. Solche Reifen können auch als schlauchlose Reifen bezeichnet werden. Denkbar ist auch, dass der Reifen auf eine Felge aufgeklebt wird. Dann ist der Einsatz von Felgen ohne Felgenhörner möglich. Solche Reifen können auch als tubular-Reifen oder Schlauchreifen bezeichnet werden.

In allen Ausgestaltungen ist es möglich und bevorzugt, dass der Reifen im bestimmungsgemäßen Gebrauch eine maximale Breite kleiner 36 mm oder kleiner 34 mm und insbesondere kleiner 30 mm aufweist. Insbesondere kann eine maximale Breite des Reifens im bestimmungsgemäßen Gebrauch weniger als 32 mm, 28 mm oder 25 mm betragen. In einem konkreten Fall liegt die Breite des Reifens zwischen etwa 25 und 29 mm und kann zum Beispiel 27,2 mm betragen. Vorzugsweise ist der Reifen für einen Betriebsdruck zwischen 4 und 12 bar und insbesondere zwischen 6 und 10 bar und besonders bevorzugt für ein Betriebsdruck von etwa 8 bar vorgesehen und ausgebildet. Möglich ist der Einsatz auch für sogenannte Gravelbikes, bei denen eine Breite des Reifens auch größer sein kann.

In allen Ausgestaltungen ist es bevorzugt, dass sich die zentrale Lauffläche über ein Winkelsegment von mehr als 18° oder insbesondere mehr als 20° und weniger als 80° und vorzugsweise weniger als 70° quer zur Umfangsrichtung der Laufradkomponente erstreckt. Besonders bevorzugt ist die zentrale Lauffläche symmetrisch zur Längsschnittebene ausgebildet, sodass sie sich auf jeder Seite über einen Bereich von insbesondere zwischen 9° oder 10° und 35° erstreckt. Vorzugsweise erstreckt sich die zentrale Lauffläche insgesamt über ein Winkelsegment von mehr als 25° und weniger als 70° und insbesondere über ein Winkelsegment von mehr als 35° und weniger als 65°. In besonders bevorzugten Ausgestaltungen erstreckt sich die zentrale Lauffläche über ein Winkelsegment von zwischen 35° und 55° oder 60° und kann konkret bei ca. 22° oder 52° liegen.

Besonders bevorzugt erstrecken sich die Aeroelemente auf jeder Seite in einem Winkelband von weniger als 45° oder weniger als 40° Breite. Das Winkelband der Aeroelemente schließt sich vorzugsweise direkt oder nahezu direkt an das Winkelsegment der zentralen Lauffläche an. Insbesondere erstrecken sich die beiden Winkelbänder auf den jeweiligen Seiten über einen Winkelbereich von zwischen 20° und 40° und vorzugsweise jeweils über ein Winkelband mit einer Winkelbreite zwischen 25° und 35°.

In allen Ausgestaltungen ist es besonders bevorzugt, dass die Aeroelemente mehr als 5 % einer Oberfläche des Winkelbandes und weniger als 25 % der Oberfläche des Winkelbandes einnehmen. Besonders bevorzugt nehmen die Aeroelemente zwischen 10 % und 20 % einer Oberfläche des Winkelbandes ein. In einer konkreten Ausgestaltung liegt der Anteil der Aeroelemente an der Oberfläche eines Winkelbandes bei 17,5 % +/-2,5 %.

Wenn ein Teil der Aeroelemente und z. B. auf jeder Seite die Hälfte der dort vorhandenen Aeroelemente radial etwas weiter außen angeordnet ist und die andere Hälfte der dort vorhandenen Aeroelemente radial etwas weiter innen angeordnet ist, dann wird das Winkelband insgesamt größer. Der relative Flächenanteil der Aeroelemente an der Oberfläche eines Winkelbandes wird dadurch geringer, obwohl sich die Gesamtfläche aller Aeroelemente nicht verändert hat. Dann liegt der Flächenanteil eher im niedrigeren Bereich und kann auch bei 7,5% oder 10% +/-2,5% liegen.

Besonders bevorzugt sind die Elemente auf wenigstens einer Seite symmetrisch über dem Umfang verteilt angeordnet. Besonders bevorzugt sind die Aeroelemente wenigstens teilweise und vorzugsweise gruppenweise und insbesondere nahezu alle und besonders bevorzugt alle identisch ausgebildet. Unter "identisch" wird hier eine Übereinstimmung verstanden, wie sie sich regelmäßig bei der Produktion ergibt.

Besonders bevorzugt ist der Reifen (bzw. die radial äußere Hälfte des Reifens) im Wesentlichen oval ausgebildet. Der Reifen weist im äußeren Bereich insbesondere eine etwa elliptische Form mit einer radialen Halbachse auf, die größer ist als eine axiale Halbachse.

In allen Ausgestaltungen ist es bevorzugt, dass die Form der radial äußeren Hälfte des Reifens näherungsweise eine Ellipsenform aufweist und im bestimmungsgemäßen Gebrauch wenigstens in einem Winkelbereich radial innerhalb der Ellipsenform verbleibt. Insbesondere verbleibt die äußere Oberfläche des Reifens im bestimmungsgemäßen Gebrauch bei wenigstens einem der Winkel von 45° und 60° vom Scheitelpunkt aus gesehen radial innerhalb der Ellipsenform. Besonders bevorzugt verbleibt die äußere Oberfläche des Reifens in dem Winkelbereich von 45° bis 60° gemessen vom Scheitelpunkt aus radial innerhalb der Ellipsenform. Dadurch ergibt sich eine etwas schlankere Form als durch eine Ellipsenform vorgegeben ist, die eine messbar verbesserte Aerodynamik aufweist.

Insgesamt weist der Reifen vorzugsweise eine etwa U-förmige Querschnittsform auf, an die sich an den Enden der Schenkel des U's die Wulstbereiche anschließen. Insgesamt kann der Querschnitt des Reifens als Omega-förmig bezeichnet werden.

Vorzugsweise weist die an den Reifen angepasste Ellipsenform eine radiale Halbachse auf, die größer ist als eine axiale Halbachse.

Dabei ist ein Verhältnis der radialen Halbachse zu der axialen Halbachse vorzugsweise größer als 1 und kleiner als 1,25 und liegt insbesondere zwischen 1,1 und 1,2. Insbesondere liegt das Verhältnis bei 1,13+/-5 %, wenn der Reifen und die Laufradkomponente bestimmungsgemäß verwendet werden, zum Beispiel mit einem Betriebsdruck von vorzugsweise 8 bar.

In allen Ausgestaltungen ist es bevorzugt, dass wenigstens eine Indikatoreinheit wenigstens ein Indikatorelement umfasst und geeignet ist, unterschiedliche Verschleißstufen anzuzeigen. Dabei ist es möglich, dass bei Erreichen einer vorbestimmten Verschleißstufe die aerodynamischen Eigenschaften bei Verwendung an einem Vorderrad unter ein vorbestimmtes Maß abgesunken sind. Bei Erreichen einer vorbestimmten weiteren Stufe sind vorzugsweise die aerodynamischen Eigenschaften des Reifens und der Laufradkomponente insgesamt bei Verwendung an einem Hinterrad unter ein vorbestimmtes Maß abgesunken. In einfachen Ausgestaltungen sind die Indikatorelemente bzw. ist die Indikatoreinheit als Vertiefung auf der äußeren Umfangsfläche des Reifens ausgebildet. Die Indikatoreinheit ist insbesondere (in einem zentralen Bereich) auf der Lauffläche ausgebildet und die Lauffläche unterliegt im normalen Betrieb dem größten Verschleiß. Das bedeutet, dass eine Indikatoreinheit mit unterschiedlich tief ausgebildeten Indikatorelementen geeignet zur Anzeige des Verschleißes ist. Wenn der Verschleiß soweit fortgeschritten ist, dass ein Indikatorelement nicht mehr sichtbar ist, wird eine entsprechende Verschleißstufe angezeigt.

In allen Ausgestaltungen ist es bevorzugt, dass die Laufradkomponente eine Felge umfasst, auf der der Reifen montierbar ist. Vorzugsweise weist die Felge eine maximale Breite größer als 2/3 und insbesondere größer als 3/4 oder 7/8 der maximalen Breite des Reifens auf. Insbesondere weist die Felge eine maximale Breite auf, die kleiner ist als 4/3 oder 5/4 der Breite des Reifens.

Besonders bevorzugt ist die Felge in einem radial mittleren Bereich des Felgenkörpers und insbesondere in einem Bereich zwischen 40% und 65% (und insbesondere zwischen 50% und 65%) der radialen Höhe des Felgenkörpers am breitesten. In einer konkreten Ausgestaltung ist die maximale Felgenbreite größer als die maximale Reifenbreite und ist vorzugsweise 10% (insbesondere +/-5%) breiter als die maximale Reifenbreite. Das gilt insbesondere im betriebsbereiten Zustand mit einem Innendruck in dem Reifen von vorzugsweise wenigstens 5 bar oder 8 bar.

In vorteilhaften Ausgestaltungen ist die Felge als Hohlkammerfelge ausgebildet und weist einen (etwa) V- oder U-förmigen Felgenboden auf und besteht wenigstens zum Teil aus einer Leichtmetalllegierung und/oder wenigstens einem Faserverbundwerkstoff. Eine derartige Felge erlaubt eine aerodynamische und leichte Ausgestaltung, die sich für den Einsatz im sportlichen und professionellen Bereich des Radsports eignet.

Besonders bevorzugt weist die Felge eine im Wesentlichen glatte Oberfläche auf. Insbesondere weist die Oberfläche der Felge keine Verwirbelungselemente auf.

In bevorzugten Weiterbildungen umfasst die Laufradkomponente Speichen und eine Nabe.

Vorzugsweise ist wenigstens eine Indikatoreinheit auf der Lauffläche auf dem Umfang des Reifens der Laufradkomponente umfasst. Die Indikatoreinheiten zeigen insbesondere ein Maß für die aerodynamische Qualität des Reifens an.

Eine Indikatoreinheit als aerodynamische Qualitätsanzeige ist sehr vorteilhaft, da sie einfach und zuverlässig ein Qualitätsmaß für die Aerodynamik des eingesetzten Reifens der Laufradkomponente zeigt. Dem Fahrer wird schnell und auf den ersten Blick sichtbar, ob der eingesetzte Reifen an dem Vorder- oder Hinterrad seinen derzeitigen Qualitätsansprüchen in aerodynamischer Hinsicht genügt.

Vorzugsweise sind die Indikatoreinheiten mehrstufig ausgebildet und bei Erreichen einer bestimmten Verschleißstufe wird angezeigt, dass die Verwendung des Reifens an einem Vorderrad in aerodynamischer Hinsicht nicht mehr empfohlen ist, aber an einem Hinterrad noch empfohlen ist oder sein kann. Dementsprechend kann bei Erreichen einer höheren Verschleißstufe angezeigt werden, dass die Verwendung des Reifens an einem Hinterrad in aerodynamischer Hinsicht nicht mehr empfohlen ist. Bei Erreichen einer weiteren vordefinierten Verschleißstufe kann z. B. angezeigt werden, dass die Verwendung des Reifens aus Sicherheitsgründen nicht mehr empfohlen ist.

In Weiterbildungen kann in vorteilhafter Weise eine aerodynamische Qualitätsstufe eines Reifens einer Laufradkomponente eines wenigstens teilweise muskelbetriebenen Fahrzeugs und insbesondere eines Fahrrads wie eines Rennrades, Mountainbikes, E-Bikes oder dergleichen mehr angezeigt werden. Dabei kann an dem Reifen ein Maß für eine aerodynamische Qualitätsstufe des Reifens abgelesen werden. An dieser Stelle wird darauf hingewiesen, dass die Laufradkomponente unter anderem an Rennrädern, Mountainbikes, E-Bikes oder dergleichen mehr eingesetzt werden kann.

Insgesamt hat die Erfindung erhebliche Vorteile und ermöglicht unabhängig von der Kombination von Felge und Reifen eine erhebliche Steigerung der aerodynamischen Qualität, sodass in vielen Situationen der Fahrer weniger Leistung und somit weniger Energie aufwenden muss. Dabei ermöglicht eine optionale Indikatoreinheit auf einfache und zuverlässige Art und Weise die Anzeige, wann die aerodynamische Performance abnimmt. Die aerodynamischen Qualität kann auch als aerodynamische Performance bezeichnet werden. Weiterhin kann dann auch angezeigt werden, wenn der Reifen eine kritische Wandstärke erreicht hat und aus Sicherheitsgründen ersetzt werden sollte.

Aus Windkanalversuchen hat sich ergeben, dass ein stärker genutzter Reifen einen früheren Strömungsabriss aufweist und dadurch aerodynamische Performance einbüßt. Es hat sich auch herausgestellt, dass insbesondere der zu erreichende Segeleffekt bei einem Fahrradlaufrad vom Reifen abhängig und insbesondere auch vom Zustand des Reifens abhängig ist.

Erfindungsgemäß sind Aeroelemente vorgesehen, die diskret und separat auf der Oberfläche des Reifens ausgebildet sind und die vorzugsweise eine definierte Tiefe von vorzugsweise mehr als 0,5 mm aufweisen. Dadurch wird ein Segeleffekt ermöglicht, der auch bei Windkanalmessungen ersichtlich ist. Die Indikatoreinheit kann beispielsweise anzeigen, wann die aerodynamische Performance der Laufradkomponente um beispielsweise XX % abgenommen hat, wenn zum Beispiel die zweite Stufe erreicht wird.

Insgesamt hat eine (nahezu elliptische) Reifenform eine vorteilhafte Auswirkung auf den Luftwiderstand, wobei durch die Aeroelemente ein ideales Turbulierungsniveau (Verwirbelung) erreichbar ist.

Die Aeroelemente können in einfachen Ausgestaltungen als kantige und z. B. mehreckige oder rechteckige Aussparungen ausgebildet sein und senkrechte oder nahezu senkrechte Aussparungen mit einer vordefinierten Tiefe bilden.

Erstaunlicherweise hat sich herausgestellt, dass dadurch ein nahezu geschwindigkeitsunabhängiger Segeleffekt und eine verhältnismäßig geringe Seitenwindanfälligkeit erzielbar sind. Insbesondere ist der Segeleffekt auch bei relativ geringen Geschwindigkeiten von 30 km/h schon deutlich ausgeprägt und kann auch experimentell gemessen und aufgezeigt werden.

Im Rahmen der Erfindung hat sich herausgestellt, dass bei Konkurrenzprodukten oftmals eine hohe Abhängigkeit der aerodynamischen Eigenschaften von der Kombination von Reifen und Felge und der Relativgeschwindigkeit vorliegt. Bei der Erfindung hat sich hingegen gezeigt, dass Laufradkomponenten aus Kombination unterschiedlicher Felgen und Reifen bei unterschiedlichsten Relativgeschwindigkeiten vorteilhafte Effekte erzielen.

Es hat sich auch herausgestellt, dass die erfindungsgemäße Laufradkomponente zu einem vergleichsweise tieferen Lenkmoment führt. Insgesamt kann anhand von Windkanaldaten aufgezeigt werden, dass mit der Laufradkomponente sowohl der aerodynamische Widerstand als auch das daraus resultierende Lenkmoment reduziert werden kann.

Vorteilhaft ist das Erreichen eines Segeleffekts schon bei tieferen Geschwindigkeiten von zum Beispiel 30 km/h, wobei sich herausgestellt hat, dass die Verteilung der seitlichen Kräfte durch den Reifen auch positiv beeinflusst wird, was sich in der Reduktion von dem Lenkmoment zeigt. Das Erreichen eines Segeleffekts schon bei tieferen Geschwindigkeiten von zum Beispiel 30 km/h ist sehr vorteilhaft, da auf vielen Touren nicht immer Höchstgeschwindigkeiten gefahren werden können. Vorteilhafte Effekte bei schon 30 km/h oder 35 km/h unterstützen den Fahrer insgesamt besser.

Mit umfangreichen Windkanaltests wurde untersucht, wie ein für einen Fahrradreifen idealer Grenzschichtumschlag (Transition) erreicht werden kann. Der Strömungsverlauf geht von der laminaren Strömung im Laminarbereich in dem Übergangsbereich (Transition) schließlich in die turbulente Strömung über, die im Turbulenzbereich vorliegt. Dabei wurde festgestellt, dass durch den idealen Grenzschichtumschlag die innere Dynamik und der Segeleffekt von Laufrädern und Laufradkomponenten markant verbessert werden kann. Der eingesetzte Reifen kann unabhängig von der verwendeten Felge sehr vorteilhafte Wirkungen entfalten.

Insgesamt hat sich herausgestellt, dass die ideale Transition bzw. der Grenzschichtumschlag durch den Einsatz von relativ wenigen Aeroelementen erreicht wird, wobei die Aeroelemente insbesondere eine radial zum Laufradmittelpunkt verlaufende Kante und/oder eine vorzugsweise etwa rechteckige Tasche aufweisen können.

Das Aeroelement bzw. die Tasche des Aeroelements weisen vorzugsweise eine Tiefe von wenigstens 0,5 mm und insbesondere etwa 1 mm auf. Die Kante bzw. radiale Länge des Aeroelements hat idealerweise eine Länge von etwa 8 mm und das Aeroelement bzw. die Tasche hat vorzugsweise eine Breite (in Umfangsrichtung) von idealerweise etwa 6 oder 7 mm. In besonders bevorzugten Ausgestaltungen sind auf jeder Reifenseite 48 Aeroelemente bzw. Taschen angeordnet, wobei die Taschen auf den beiden Seiten jeweils alternierend über dem Umfang verteilt angeordnet sind.

Für den theoretischen Hintergrund gilt, dass bei idealem Turbulierungsniveau durch den Reifen die Laufradkomponente und damit eine Kombination aus Felge und Reifen aerodynamische Vorteile gegenüber anderen Kombinationen von Felgen und Reifen aufweist. Erst durch die Kombination von einem aerodynamischen Reifen und einer aerodynamischen Felge kann der Segeleffekte bei Fahrradlaufrädern größtmöglich ausgenutzt werden. Hier hat sich herausgestellt, dass der Reifen mit unterschiedlichen Felgen gute Ergebnisse bringt.

Grundsätzlich gilt, dass unterschiedliche Luftströmungen unterschiedlich über ein und denselben Körper fließen. Dabei unterscheidet sich die Strömung in Richtung und Geschwindigkeit. Für den Fall eines Laufrades bzw. einer Laufradkomponente ist die Strömung überwiegend turbulent.

Hinter dem angeströmten Profil der Laufradkomponente bzw. des Felgenprofils entsteht ein Gebiet mit niedrigerem Druck, welches den Luftwiderstand erhöht. Das Ziel der vorliegenden Laufradkomponente ist es daher, dieses Druckgebiet gering und insbesondere möglichst gering zu halten, umso den Windwiderstand zu reduzieren und gewissermaßen den Auftrieb bzw. den Segeleffekt zu vergrößern.

Der Luftwiderstand ist abhängig von der Größe der angeströmten Fläche sowie von der Größe und Ausrichtung des hinter der Felge bzw. Laufradkomponente entstehenden Niedrigdruckgebiets, welches ebenfalls den Widerstand vergrößert. Je aerodynamischer die Laufradkomponente und die Felge sind, desto kleiner ist die angeströmten Fläche und das Niedrigdruckgebiet. Zudem richtet eine aerodynamische Laufradkomponente das Niedrigdruckgebiet so aus, dass der Windwiderstand verringert und somit der Segeleffekt entsteht. Die Laufradkomponente generiert somit zunehmend "Auftrieb".

Um den Luftwiderstand einer Laufradkomponente gering zu halten, muss die Luft, welche über das Laufrad strömt, möglichst lange an der Felgenoberseite entlang strömen. Zudem richtet die Felgenform dieses Soggebiet aus. Dadurch kann der Widerstand durch ein Niedrigdruckgebiet verringert werden.

Es hat sich als positiv herausgestellt, wenn Reifen und Felge je etwa ähnlich breit sind. Dann kann die Luft besser vom Reifen auf die Felge strömen, ohne sich dabei von dem Laufrad zu lösen.

Es hat sich weiterhin herausgestellt, dass es eine wichtige Aufgabe des Reifens der Laufradkomponente ist, die entlang strömende Luft zu verwirbeln. Eine turbulente Strömung haftet besser an dem Reifen und der Felge der Laufradkomponente als eine gleichmäßige laminare Strömung.

Es hat sich auch herausgestellt dass es sehr vorteilhaft ist, wenn die Luftströmung an der Oberfläche des Reifens verwirbelt wird. Dann ist eine Verwirbelung der Luft bzw. eine weitere und noch stärkere Verwirbelung der Luftströmung an der Felgenoberfläche nicht mehr nötig, sondern kann kontraproduktiv sein.

Ein wesentlicher Aspekt der Erfindung liegt darin, dass der Reifen der Laufradkomponente die Luftströmungen in einen definierten turbulenten Zustand versetzt, ohne zu viel Turbulenzen zu erzeugen. Dadurch haftet die Luft nicht am Reifen und löst sich bereits frühzeitig von diesem.

Es kann vorteilhaft sein, wenn der Reifen der Laufradkomponente und/oder die Lauffläche leicht profiliert ist. Dann wird auch die Bodenhaftung bei Nässe verbessert.

Insgesamt nutzte die Erfindung den sogenannten COANDA-Effekte. Der COANDA-Effekt ist eine Ursache für die Entstehung des Niedrigdruckgebietes hinter dem Felgenprofil der Laufradkomponente. Dieser beschreibt das Phänomen von Flüssigkeiten und Gasen an einer Oberfläche entlang zu fließen. Die Luft, die somit zur Felgenoberfläche gezogen wird, lässt ein Niedrigdruckgebiet auf der windabgewandten Seite entstehen.

In bevorzugten Ausgestaltungen ist die Laufradkomponente als Reifen ausgebildet und weist keine weiteren Teile auf.

Weitere Vorteile und Merkmale der Erfindung ergeben sich aus den Ausführungsbeispielen, welche im Folgenden mit Bezug auf die beiliegenden Figuren erläutert werden.

In den Figuren zeigen:
- Figur 1: eine stark schematische Seitenansicht eines Rennrades mit erfindungsgemäßen Laufradkomponenten;
- Figur 2a: eine perspektivische Ansicht einer erfindungsgemäßen Laufradkomponente;
- Figur 2b: einen Querschnitt durch eine Felge und einen Reifen eines Laufrades nach Figur 1;
- Figur 3: eine stark schematische Vorderansicht eines Reifens einer erfindungsgemäßen Laufradkomponente;
- Figur 4: eine Seitenansicht des Reifens nach Figur 3;
- Figur 5: einen Querschnitt durch den Reifen nach Figur 3;
- Figur 6: einen anderen Querschnitt durch den Reifen nach Figur 3;
- Figur 7: eine stark schematische Draufsicht auf den Reifen nach Figur 3;
- Figur 8: eine vergrößertes Detail einer Seitenansicht des Reifens nach Figur 3;
- Figur 9a: ein vergrößertes Detail der Seitenansicht des Reifens nach Figur 3 mit und ohne Maßangaben;
- Figur 9b: einen Schnitt durch ein Aeroelement des Reifens nach Figur 3 in Umfangsrichtung;
- Figur 10: den Querschnittsverlauf einer angepassten Ellipse und des Reifens;
- Figuren 11a-11c: Messungen unterschiedlicher Laufradkomponenten im Windkanal bei unterschiedlichen Geschwindigkeiten; und
- Figuren 12a und 12b: Lenkmomente bei zwei unterschiedlichen Geschwindigkeiten unter Verwendung unterschiedlicher Laufradkomponenten.

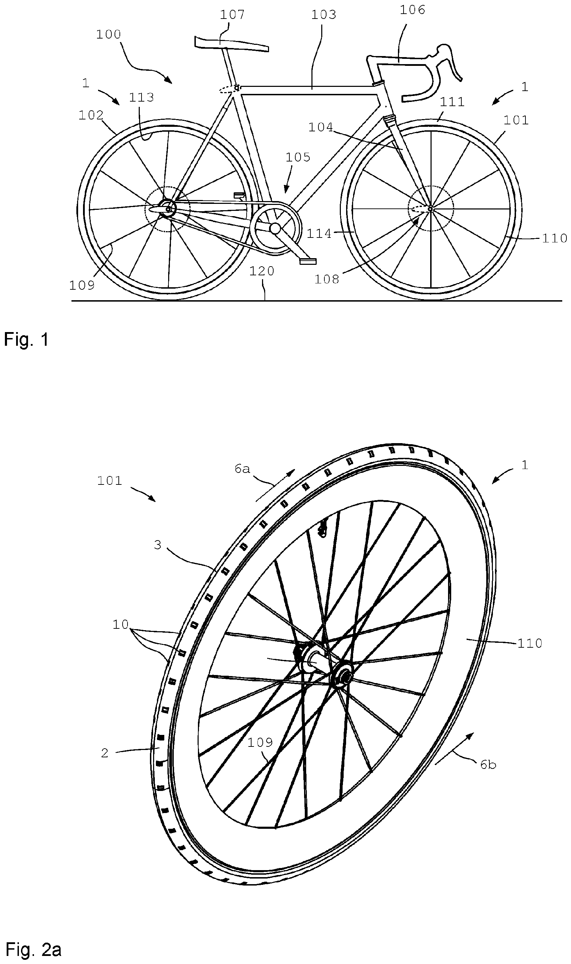

In Figur 1 ist ein Rennrad als Fahrrad 100 in einer stark schematischen Seitenansicht auf einem ebenen Untergrund 120 abgebildet. Das Rennrad 100 verfügt über ein Vorderrad 101 und ein Hinterrad 102, die jeweils eine erfindungsgemäße Laufradkomponente 1 umfassen bzw. als solche ausgebildet sind.

Das Fahrrad 100 verfügt des Weiteren über einen Rahmen 103, eine Gabel 104, eine Tretkurbeleinheit 105, einen Lenker 106, einen Sattel 107, Naben 108, Speichen 109 und Felgen 110, an denen die Reifen 2 aufgenommen sind. In der Seitenansicht sind die seitlichen Felgenflanken 111 mit den hier eben und glatt ausgestaltet Oberflächen 114 und dem Felgenboden 113 erkennbar.

Das Rennrad 100 ist für den sportlichen, semiprofessionellen und professionellen Bereich des Radsports vorgesehen und eignet sich insbesondere auch für die Teilnahme und Durchführung an internationalen Wettbewerben. Von besonderer Wichtigkeit ist die Aerodynamik der Komponenten und hier speziell der Laufräder 101 und 102, die über Laufradkomponenten 1 verfügen oder als solche ausgebildet sind. Für den Windwiderstand spielen insbesondere die Querschnittsfläche der Laufradkomponente 1 und die aerodynamischen Eigenschaften der Laufradkomponente 1 eine erhebliche Rolle.

Figur 2a zeigt eine perspektivische Ansicht einer Laufradkomponente 1, die ein ganzes Laufrad 101 inklusive Felge 110, Nabe 108, Speichen 109 und eines Reifens 2 umfassen kann. Die Laufradkomponente 1 kann auch nur die Felge 110 und den Reifen umfassen oder auch nur aus dem Reifen 2 bestehen. Während Figur 1 eine schematische Darstellung zeigt, ist in Figur 2a eine realistischere Darstellung der Laufradkomponente 1 wiedergegeben.

Das Laufrad 101 bewegt sich in Vorwärtsrichtung 6b, wenn das Laufrad 101 in die Rotationsrichtung 6a rotiert. Das Laufrad 101 ist insgesamt aerodynamisch ausgebildet. Auf der Oberfläche des Reifens 2 sind einzelne und voneinander separate und flächige Aeroelemente 10 ausgebildet, die aerodynamisch günstige Eigenschaften des Laufrades 101 ermöglichen.

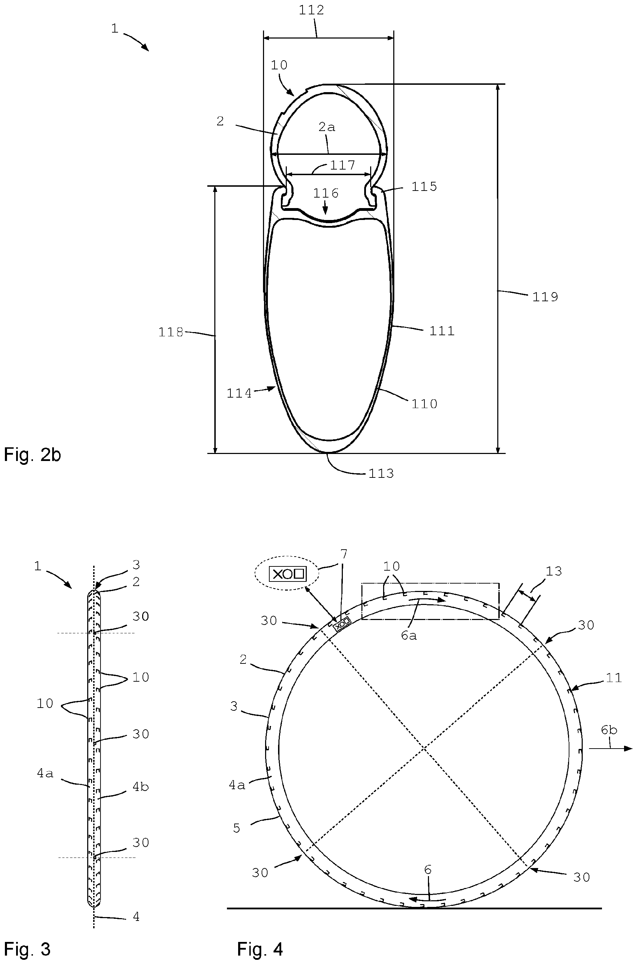

Figur 2b zeigt einen Querschnitt einer Felge 110 mit einem Reifen 2, die an den Laufrädern 101 und 102 des Rennrades 100 eingesetzt werden können. Figur 2b zeigt hier einen möglichen Querschnitt von Figur 2a. In Figur 2a kann aber auch schematisch ein Laufrad mit einem Schlauchreifen dargestellt sein, der auf die Felge aufgeklebt ist.

In Figur 2b ist die Felge 110 als Hohlkammerfelge ausgebildet und weist seitliche Felgenflanken 111, ein Felgenbett 116, ein Felgenboden 113 und Felgenhörner 115 auf, an denen hier ein Wulstreifen als Reifen 2 aufgenommen ist. Der Reifen 2 ist als Drahtreifen oder Faltreifen oder insbesondere auch als schlauchloser Reifen 2 ausgebildet und ist hier für den Betrieb ohne Schlauch vorgesehen. Die umlaufenden Reifenwülste 2b des Reifens liegen an den Felgenhörnern 115 der Felge 110 an.

An den Seitenflanken 111 können entgegen der Darstellung hier im oberen Bereich Bremsflanken ausgebildet sein. Es ist aber auch möglich und bevorzugt, dass das Rennrad 100 über Bremsscheiben verfügt und Bremsflanken nicht nötig sind.

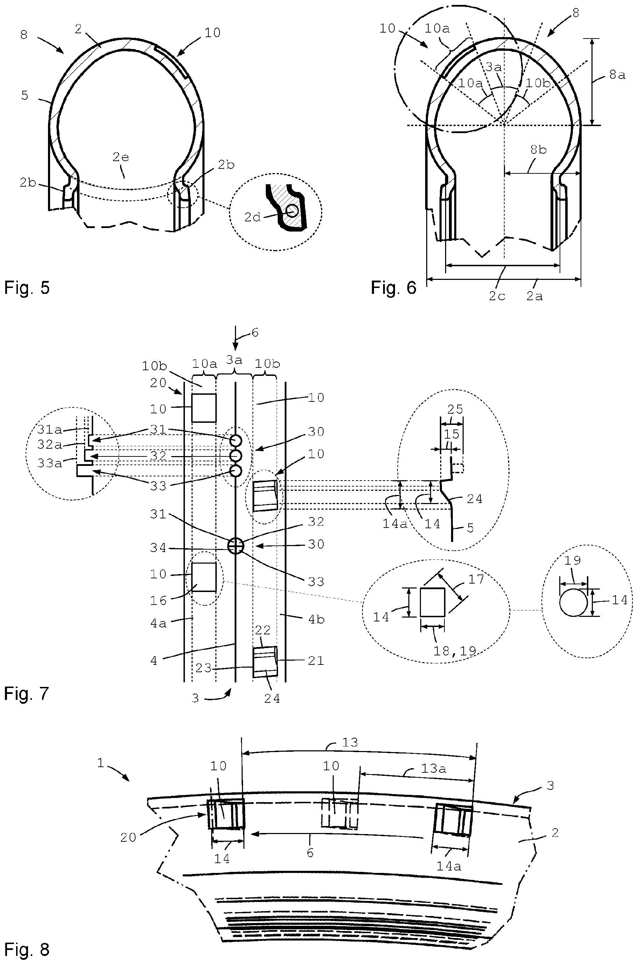

Zwischen den Felgenhörnern ergibt sich eine Maulweite 117. Die Breite 2c (vgl. Fig. 6) des Reifens 2 ist für diese Maulweite geeignet. Die größte Gesamtbreite 112 der Felge 110 befindet sich hier im Bereich der Hohlkammer in einem radial mittleren Bereich des Felgenkörpers zwischen dem Felgenboden 113 und den Felgenhörnern 115 oder dem Felgenbett 116. Die größte Gesamtbreite 112 der Felge 110 befindet sich hier bei ca. 60% (+/- 5%) der Felgenhöhe 118 und vorzugsweise bei 40% (+/- 5%) der radialen Höhe 119 von Felge und Reifen.

Hier sind die Reifen als Clincher bzw. Drahtreifen oder Faltreifen ausgebildet. In allen Ausgestaltungen können die Reifen aber auch als tubeless-Reifen bzw. als schlauchloser Mantel ausgeführt sein. Ebenso können die Reifen auch als tubular-Reifen oder als Schlauchreifen ausgebildet sein. Dazu wird jeweils eine entsprechend angepasste Felge eingesetzt.

Figur 3 zeigt eine schematische Vorderansicht und Figur 4 eine schematische Seitenansicht eines Reifens 2 der Laufradkomponente 1. Es ist möglich, dass als Produkt nur ein Reifen 2 als Laufradkomponente 1 angeboten und verkauft wird. Möglich ist es aber auch, dass eine Laufradkomponente neben dem Reifen auch eine Felge 110 umfasst, wobei der Reifen 2 dann als Verschleißteil nachgekauft werden kann.

Der Reifen 2 der Laufradkomponente 1 weist eine zentrale Lauffläche 3 auf dem Umfang des Reifens 2 auf. Die Lauffläche 3 erstreckt sich in einem zentralen Abschnitt, der eine Längsschnittebene 4 des Reifens 2 definiert. Auf beiden Seiten 4a, 4b von der Längsschnittebene 4 sind beabstandet von der Längsschnittebene 4 und somit seitlich versetzt jeweils separat und einzeln ausgebildete Aeroelemente 10 vorgesehen. Jedes Aeroelement 10 ist hier als Vertiefung in der Oberfläche 5 des Reifens 2 ausgebildet. Die Aeroelemente definieren zwischen ihren radial äußeren und radial inneren Enden Aerobänder 10a, 10b (vgl. Figur 7).

Zusätzlich ist eine Indikatoreinheit 30 oder sind mehrere Indikatoreinheiten 30 auf dem Umfang des Reifens 2 verteilt vorgesehen. Die Indikatoreinheiten 30 sind jeweils innerhalb der zentralen Lauffläche 3 des Reifens 2 ausgebildet.

Die einzelnen Aeroelemente 10 sind hier auf jeder Seite 4a, 4b jeweils symmetrisch über dem Umfang verteilt angeordnet. Auf den beiden Seiten 4a und 4b sind die Aeroelemente 10 jedoch in Umfangsrichtung versetzt angeordnet, sodass sich in Umfangsrichtung die Aeroelemente 10 auf der einen Seite 4a und anderen Seite 4b jeweils alternierend abwechseln.

Wie in Figur 4 stark schematisch eingezeichnet, kann auf einer Seite 4a oder 4b oder beiden Seiten 4a, 4b wenigstens eine Typangabe 7 vorhanden sein, die Zeichen und/oder Buchstaben und/oder Zahlen oder sonstige Symbole umfasst und dem Benutzer Auskunft über den Reifentyp und gegebenenfalls dessen Abmessungen gibt. Die eingezeichneten Symbole sind nur beispielhaft abgebildet und werden entsprechend der jeweiligen nationalen oder internationalen Regeln und Gesetze ausgestaltet und ausgebildet.

In der Seitenansicht nach Figur 4 ist erkennbar, dass hier über dem Umfang insgesamt vier Indikatoreinheiten 30 vorgesehen sind, die in Umfangsrichtung jeweils einen Winkel von 90° zueinander versetzt angeordnet sind. Möglich ist es aber auch, dass nur eine Indikatoreinheit 30 oder dass zwei, drei oder noch mehr Indikatoreinheiten 30 auf dem Umfang angeordnet sind. Vorzugsweise weisen die einzelnen Indikatoreinheiten jeweils mehrere Indikatorelemente oder Indikatorstufen oder dergleichen auf, sodass der Benutzer durch einen Blick auf eine Indikatoreinheit ein Maß für die aerodynamische Qualität bzw. für den Zustand des Reifens in aerodynamischer Hinsicht erhält. Zusätzlich ist bevorzugt, dass wenigstens eine Indikatorstufe oder wenigstens ein Maß der Indikatoreinheit anzeigt, wenn ein Reifen auch aus Sicherheitsgründen ausgetauscht werden sollte.

Die einzelnen Aeroelemente 10 sind als Vertiefungen 11 ausgebildet und in Umfangsrichtung 6 regelmäßig in einem Abstand 13 versetzt angeordnet. Hier sind auf jeder Seite 4a, 4b jeweils 48 Aeroelemente über dem Umfang des Reifens verteilt vorgesehen. Es ist möglich, dass auch mehr oder weniger Indikatorelemente auf einer oder auf beiden Seiten 4a, 4b ausgebildet sind. Es hat sich aber gezeigt, dass zu viele Aeroelemente zu viele Verwirbelungen auslösen können, die den Widerstand erhöhen, und, dass zu wenige Aeroelemente zu wenig Verwirbelungen erzeugen. Gerade bei geringen und mittleren Geschwindigkeiten.

In Figur 4 ist ersichtlich, dass der Flächenanteil der Aeroelemente 10 insgesamt klein an der äußeren sichtbaren Oberfläche des Reifens ist. Hier liegt der Flächenanteil zwischen etwa 3% und 7% und beträgt vorzugsweise etwa 5%.

Figuren 5 und 6 zeigen zwei unterschiedliche Radialschnitte durch den Reifen 2, wobei in Figur 5 ein Schnitt durch ein Aeroelement 10 auf der Seite 4b und in Figur 6 einen Schnitt durch ein Aeroelement 10 auf der anderen Seite 4a zu erkennen ist. Der Reifen 2 ist in allen Ausführungsbeispielen vorzugsweise symmetrisch bezüglich der Längsschnittebene 4 ausgebildet, die vorzugsweise zentral durch den Reifen 2 verläuft.

Wie in Figuren 5 und 6 zu erkennen, weist der Reifen 2 einen etwa U-förmigen bzw. Omega-förmigen Querschnitt auf, wobei der radial äußere Teil näherungsweise eine Ellipsenform 8 aufweist und wobei radial innen die Reifenwülste 2b zu erkennen sind. In dem vergrößerten Detail bei Figur 5 sind Verstärkungsringe 2d abgebildet, die enthalten sein können. Es ist auch möglich, dass der Reifen 2 als Schlauchreifen 2e ausgebildet ist und direkt auf die Felge 110 aufgeklebt ist. Dann bildet der Schlauchreifen 2e direkt auch den Schlauch und weist einen im Querschnitt geschlossenen Umfang auf. Die radial innere Wandung ist in Figur 5 gestrichelt dargestellt. Bei einer solchen Ausgestaltung fallen die Reifenwülste 2b weg.

Wie den Darstellungen nach Figur 5 und Figur 6 zu entnehmen ist, ist die Oberfläche 5 des Reifens 2, die im Betrieb sichtbar ist, weitgehend und insbesondere weitestgehend glatt ausgebildet, abgesehen von den einzelnen und separat ausgebildeten Aeroelementen 10 und den Indikatoreinheiten 30.

Die Aeroelemente 10 auf den beiden Seiten 4a, 4b sind hier jeweils in einem Winkelband 10a, 10b ausgebildet, welche sich jeweils über einen Winkel von zwischen 25° und 40° und vorzugsweise zwischen 25° und 35° und hier etwa 32,6° erstrecken. Die Winkelbänder 10a, 10b erstrecken sich auf beiden Seiten direkt anschließend an die (zentrale) Lauffläche 3, die sich hier über ein Winkelsegment 3a von vorzugsweise zwischen 20° und 60° und hier von etwa 52° erstreckt. Das bedeutet hier, dass die beiden Winkelbänder 10a, 10b jeweils bei einem Winkel von etwa 26° von der zentralen Längsschnittebene 4 aus beginnen und sich bis knapp zu einem Winkel von 60° hin erstrecken. Diese Werte beschreiben ein tatsächliches Beispiel und können in dieser und in ähnlichen Varianten z. B. um jeweils +/- 2° oder +/- 3° oder +/- 5° abweichen, insbesondere ohne darauf beschränkt zu sein.

In einem anderen konkreten Beispiel erstreckt sich die Lauffläche 3 über ein Winkelsegment 3a von 22° (+/- 5°). Die Lauffläche ist symmetrisch ausgebildet und erstreckt sich über einen Winkel von jeweils etwa 11° (+/- 2°) zu beiden Seiten der Längsschnittebene 4. Die Winkelbänder 10a, 10b schließen sich auf beiden Seiten direkt an die Lauffläche 3 an. Jedes Winkelband 10a, 10b erstreckt sich jeweils über einen Winkel von zwischen 25° und 35° und hier etwa 30,9°.

Im bestimmungsgemäßen Gebrauch weist der wesentliche Querschnitt des Reifens etwa eine Ellipsenform 8 auf, wobei die radiale Halbachse 8a vorzugsweise etwas länger ist als die axiale Halbachse 8b. Hier ist ein Verhältnis der radialen Halbachse 8a zu der axialen Halbachse 8b von zwischen 1 und 1,2 und insbesondere von etwa 1,1335 (+/-5 %) angestrebt. Die Weite 2c entspricht im montierten Zustand etwa der Maulweite 117. Die größte Weite bzw. Breite 2a entspricht vorzugsweise etwa der größten Breite 112 der Felge 110 und weicht vorzugsweise höchstens um 25 % und insbesondere höchstens um 10 % von der Breite 112 der Felge 110 ab. Hier ist es bevorzugt, dass die breiteste Stelle der Felge etwas breiter ist als der Reifen.

Figur 7 zeigt eine schematische Draufsicht auf die Oberfläche 5 des Reifens 2, wobei einige Aeroelemente 10 und zwei unterschiedliche Typen von Indikatoreinheiten 30 abgebildet sind.

Die Aeroelemente 10 begrenzen die Winkelbänder 10a, 10b und definieren diese.

Zentral sind auf der Lauffläche 3 die beiden unterschiedlichen Typen von Indikatoreinheiten 30 rein beispielhaft abgebildet. Bei einer Indikatoreinheit 30 ist diese als eine Vertiefung ausgebildet, in der hier vier unterschiedlich tiefe Verschleißstufen bzw. Indikatorelemente 31-34 ausgebildet sind. Die einzelne Verschleißstufe wird insbesondere erkennbar, wenn das entsprechende Indikatorelement 31-34 nicht mehr auf der Oberfläche erkennbar bzw. unterscheidbar ist. Möglich ist es auch, dass nach einem entsprechenden Verschleiß ein sich unter der Oberfläche befindliches Material mit einer anderen Farbe sichtbar wird. Die Indikatoreinheiten 30 oder einzelne Indikatorelemente 31-34 können in der Längsschnittebene 4 oder auch seitlich daneben innerhalb der Lauffläche 3 angeordnet sein, z. B. auch abwechselnd rechts und links neben der Längsschnittebene 4.

Alternativ dazu ist es auch möglich, Indikatoreinheiten mit drei räumlich voneinander getrennten Indikatorelementen 31, 32 und 33 vorzusehen, die jeweils aus unterschiedlich tiefen Indikatorelementen bestehen. Auch hier wird der Verschleiß dadurch angezeigt, dass durch Abrieb an der Lauffläche bedingt ein erstes Indikatorelement 31 nicht mehr sichtbar ist. Auf diese Art ist besonders einfach eine Verschleißstufe abzulesen. Gegebenenfalls können verschiedene Indikatoreinheiten auf dem Umfang des Reifens 2 (und rechts/links beabstandet von der Längsschnittebene 4 beabstandet) angeordnet werden.

Mit den Indikatoreinheiten 30 ist eine vorteilhafte Beurteilung der aerodynamischen Eigenschaften des anmeldungsgemäßen Reifens 2 möglich. Es hat sich bei einem konkreten Versuchsexemplar herausgestellt, dass sich mit zunehmenden Verschleiß die aerodynamische Eigenschaft des Reifens verschlechtert. Messungen im Windkanal haben gezeigt, dass die gemittelte erforderliche Leistung, um den aerodynamischen Widerstand eines rotierenden Vorderrads mit dem Reifen zu überwinden mit einem gebrauchten Reifen nach ca. 500 km um rund 9% zunimmt. Das im Vergleich zu einem Vorderrad mit einem neuen Reifen 2. Das wurde bei einer Prüfgeschwindigkeit (=Windgeschwindigkeit) von 45k m/h bestimmt. Oder in konkreten Zahlen bei diesem Beispiel wurde 9.0 Watt zu 8.25 Watt gewichtet und gemittelt über alle Winkel (-20° bis +20°) gemessen. Dabei hat sich die radiale Halbachse (Reifenradius) aufgrund des Verschleißes auf der Lauffläche um rund 0,3 mm reduziert.

Eine bevorzugte Abstufung für die Verschleißelemente eines mehrstufigen Verschleißindikators ist:
- 0,3 mm
- 0,6 mm
- 0,9 mm
- 1,2 mm

Denkbar sind auch Stufen in Schritten von 0,4 mm oder 0,5 mm oder 0,6 mm. Bei einem Prototyp beträgt die Dicke der Gummi-Schicht auf der Lauffläche maximal 2 mm. Ein Verschleißindikator, der tiefer als 2 mm ist, ist daher in dem Fall weniger sinnvoll.

Möglich ist auch eine nicht-lineare Abstufung bei 5%, 15%, 30% und 50% der Profildicke und zusätzlich als "normalen" Verschleißindikator bei 75% oder 90%.

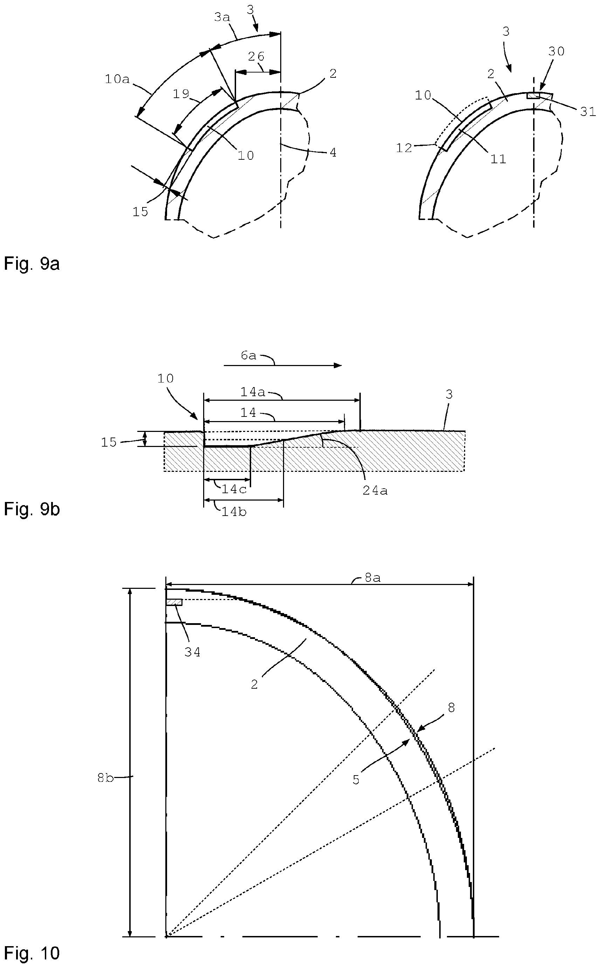

Mit zunehmendem Verschleiß nimmt im Betrieb die Dicke der Lauffläche ab, so dass die radiale Halbachse 8a kleiner wird, während die axiale Halbachse 8b gleich bleibt (vgl. auch Fig. 10). Bei einem Verschleiß von 0,3 mm verringert sich in einem konkreten Beispiel die radiale Halbachse 8a von 15,415 mm auf 15,115 mm, während die axiale Halbachse 8b bei 13,6 mm verbleibt. Das ursprüngliche Verhältnis der radialen Halbachse 8a zur axialen Halbachse 8b im Neuzustand (bei einem Luftdruck von 8 bar) von 15,415/13,6=1,1335 hat sich dann im gemessenen Beispiel nach 500 km Fahrt auf 15,155/13,6=1,1114 verringert. Die Form des (etwas) abgefahrenen Reifen ist grundsätzlich noch als oval oder elliptisch zu bezeichnen, obwohl bei ständiger Geradeausfahrt der äußere umlaufende Bereich abflacht. Streng genommen ähnelt die Form dann einer radial außen abgeplatteten oder abgeflachten Ellipse.

Zusätzlich zeigt Figur 7 hier insgesamt vier Aeroelemente 10 auf den beiden Seiten 4a und 4b von der Längsschnittebene 4.

Während auf der Seite 4a die Indikatorelemente 10 rein schematisch rechteckig abgebildet sind, weisen die Aeroelemente 10 auf der Seite 4b hier eine komplexere Struktur auf. Die unterschiedlichen Formen sind hier nur beispielhaft abgebildet. Vorzugsweise sind alle Aeroelemente 10 eines Reifens 2 gleich ausgebildet und weisen eine Form auf, wie die Aeroelemente 10 auf der Seite 4b. Vorzugsweise sind auf beiden Seiten der Längsschnittebene die meisten oder nahezu alle oder jeweils alle (unterschiedlichen) Aeroelemente 10 symmetrisch verteilt vorhanden.

Es ist aber z. B. möglich, dass eine Hälfte (oder ein Drittel oder eine feste Anzahl oder dergl.) der Aeroelemente 10 eine erste Form aufweist und eine andere Hälfte (oder eine feste Anzahl oder dergl.) der Aeroelemente 10 eine andere Form aufweist. Beispielsweise kann die Hälfte der Aeroelemente 10 rechteckig und die andere Hälfte oval oder rund oder abgerundet ausgebildet sein. Es kann z. B. auch jeweils ein Drittel rechteckig, ein Drittel rund und ein Drittel oval ausgebildet sein. Einzelne Aeroelemente 10 können auch dann noch eine andere Form aufweisen. Die unterschiedlich geformten Aeroelemente 10 sind dann vorzugsweise abwechselnd nacheinander über dem Umfang verteilt angeordnet. Insbesondere sind die Aeroelemente 10 auf beiden Seiten 4a, 4b ähnlich oder gleich ausgebildet.

Die Aeroelemente 10 sind vorzugsweise nahezu alle oder alle als kompakte Struktur 20 ausgebildet und können als einfacher Topf oder wannenförmige Vertiefung 11 mit einer einheitlichen äußeren Oberfläche 16 ausgerüstet sein.

Möglich ist es aber auch, dass die Aeroelemente 10 wenigstens zum Teil als komplexere Vertiefung ausgebildet sind und beispielsweise 3 steil (oder steiler) verlaufender Seitenwände 21, 22 und 23 aufweisen, während eine vierte Seitenwand 24 schwächer geneigt ausgebildet ist. Insbesondere ist die geringere Neigung im bestimmungsgemäßen Betrieb am oberen Ende des Reifens in Fahrtrichtung nach vorne hin ausgerichtet. Das obere Ende des Reifens befindet sich am weitesten vom Boden entfernt und die geringere Neigung ist nach vorn ausgerichtet, während das hintere Ende steil ansteigt. Dadurch werden vorteilhafte aerodynamische Eigenschaften und eine optimale Verwirbelung erzielt, ohne unnötig Energie in die Verwirbelung der Luft zu stecken. Die anströmende Luft wird sanft in die Vertiefung des Aeroelementes 10 eingeleitet und trifft am Ende des Aeroelementes 10 auf die steile Wandung auf.

Die Aeroelemente 10 befinden sich auf beiden Seiten der Lauffläche 3 jeweils innerhalb eines Winkelbandes 10a, 10b, dessen Erstreckung sich in axialer Richtung hier jeweils durch die maximale Erstreckung der Aeroelemente 10 in axialer Richtung ergibt. Das bedeutet, dass das Winkelband 10a bzw. 10b hier alle Aeroelemente 10 einer Seite durch konzentrische Kreise engstmöglich einschließt. Die jeweils beiden konzentrischen Kreise auf beiden Seiten sind jeweils gestrichelt als hier senkrechte Linien parallel zur Längsschnittebene 4 eingezeichnet.

Hier beträgt ein Anteil der Oberfläche der Aeroelemente 10 an der gesamten Umfangsfläche des Winkelbandes 10a bzw. 10b weniger als 25 % der Oberfläche des Winkelbandes 10a und vorzugsweise mehr als 5 % und liegt konkret hier im Bereich von 17,5 % +/-5 %. Durch diesen relativ geringen Anteil der Aeroelemente an der Umfangsfläche des Winkelbandes wird eine unnötig hohe Turbulenz in der anströmenden Luft vermieden, während andererseits für eine ausreichende Turbulenz auch bei geringen Relativgeschwindigkeiten von Umgebungsluft und Laufradkomponente bzw. Reifen gesorgt wird.

Der Anteil aller Oberflächen 16 aller Aeroelemente 10 zusammengenommen beträgt vorzugsweise weniger als 10 % der im bestimmungsgemäßen Gebrauch sichtbaren Oberfläche des Reifens 2 und vorzugsweise auch weniger als 10 % der gesamten äußeren Oberfläche des Reifens 2. Der Anteil der Oberflächen 16 aller Aeroelemente 10 insgesamt beträgt hier etwa 4% von der äußeren Oberfläche ohne die Reifenwülste.

Zusätzlich ist in Figur 7 auf der linken Seite schematisch ein möglicher Tiefenverlauf der Indikatorelemente 31-33 dargestellt, die jeweils entsprechende Verschleißstufen 31a, 32a und 33a anzeigen. Bei Erreichen der Tiefe 31a wird angezeigt, dass der Reifen 2 aus aerodynamischer Hinsicht nicht mehr für den Einsatz am Vorderrad empfohlen ist, wenigstens nicht bei Radrennen oder dergleichen. Das Erreichen der Tiefe 32a zeigt an, dass der Reifen 2 aus aerodynamischer Hinsicht nicht mehr für den Einsatz am Hinterrad empfohlen ist. Am Hinterrad ist der Verschleiß in aerodynamischer Hinsicht nicht so kritisch, weil das Vorderrad und der Rahmen sich über weite Bereiche davor befinden. Das Erreichen der Tiefe 33a zeigt hier an, dass der Reifen 2 auch aus aus Sicherheitsgründen nicht mehr empfohlen ist. Möglich ist es aber auch, noch weitere Stufen vorzusehen und eine feinere Abstufung zu ermöglichen.

Auf der rechten Seite von Figur 7 sind schematisch andere und ebenfalls kompakt ausgebildete Strukturen 20 von Aeroelementen 10 abgebildet. Insgesamt liegt ein Verhältnis einer maximalen Ausdehnung 17 eines Aeroelements 10 zu einer minimalen Ausdehnung 18 vorzugsweise im Bereich zwischen 1 und 5 und insbesondere im Bereich zwischen 1 und 2 und vorzugsweise zwischen 1,25 und 1,75. Das Verhältnis von einer Länge 19 in Querrichtung zu einer Länge 14 in Umfangsrichtung beträgt bei rechteckigen oder etwa rechteckigen Aeroelementen vorzugsweise mehr als 1 und weniger als 2.

In Figur 7 (und in allen anderen Ausführungsbeispielen und Ausgestaltungen) können alle Aeroelemente 10 als Vertiefung mit (nahezu) ebenem Untergrund bzw. Boden ausgebildet sein, wobei einzelne oder alle Seitenwände steil ausgebildet sind und einen Winkel von 75° oder mehr zur Umfangsoberfläche aufweisen.

Zusätzlich eingezeichnet sind in Figur 7 etwa wannenförmige Aeroelemente 10, die besonders bevorzugt sind. Diese weisen vorzugsweise etwa drei steiler ausgebildete Seitenwände 21-23 und eine flacher ausgebildete geneigte Seitenwand 24 auf. Die maximale radiale Erstreckung 15 ist vorzugsweise größer als 0,5 mm und insbesondere kleiner als 1,5 mm. Eine maximale Tiefe der Vertiefung 11 beträgt hier etwa 0,75 mm. Möglich ist es auch, dass anstelle von Vertiefungen 11 als Aeroelementen 10 Erhebungen 12 vorgesehen sind. Möglich ist es auch, dass sowohl Vertiefungen 11 als auch Erhebungen 12 (gestrichelt eingezeichnet) ausgebildet sind, wobei sich dann ein entsprechend größerer maximaler Höhenunterschied 25 ergibt.

Figur 8 zeigt ein vergrößertes Detail einer Seitenansicht der Laufradkomponente 1, wobei an dem Reifen 2 zwei Aeroelemente 10 auf der zugewandten Seite erkennbar sind, während auf der Rückseite ein Aeroelement 10 dazwischen gestrichelt eingezeichnet ist. In Umfangsrichtung liegt ein Abstand 13 zwischen den Aeroelementen 10 auf einer Seite bzw. der halbe Abstand 13a zwischen einem Aeroelement auf der einen und dem nächsten Aeroelement auf der anderen Seite vor. Im Ausführungsbeispiel sind auf jeder Seite 48 (etwa 50) Elemente 10 vorgesehen, sodass sich ein Winkelabstand 13 von 7,5° bzw. ein Winkelabstand 13a mit einem Winkel von 3,75° ergibt.

Die Länge 14 in Umfangsrichtung beträgt hier insgesamt 7 mm inklusive der geneigten Seitenwand 24. Quer dazu erstreckt sich das Aeroelement über der Oberfläche hier in radialer Richtung über eine Länge 19 von hier 8 mm. Der Reifen weist im Betrieb eine Breite 2a von 27,2 mm auf. Die lange Halbachse 8a beträgt etwa 15,4 mm und die kurze und axiale Halbachse etwa 13,6 mm.

Figur 9a zeigt links einen Ausschnitt des Querschnitts des Reifens 2, wobei diverse Abmessungen eingezeichnet sind und rechts daneben wird im Prinzip der gleiche Ausschnitt ohne Abmessungen gezeigt, um die Übersicht zu erleichtern. Ein Abstand 26 in axialer Richtung zwischen dem Beginn eines Aeroelements 10 und der zentralen Längsschnittebene beträgt in einem konkreten Beispiel etwa 5,3 mm und in einem anderen konkreten Beispiel etwa 3 mm bis 4 mm. Die Tiefe 15 der Aeroelemente beträgt hier jeweils 0,75 mm.

Zusätzlich ist in der rechten Abbildung von Figur 9a noch gestrichelt ein Aeroelement 10 abgebildet, welches als Erhebung 12 ausgebildet ist. Außerdem ist in Figur 9a rechts noch eine Indikatoreinheit mit einem Indikatorelement 31 abgebildet. Nach dem entsprechenden Abrieb wird das Indikatorelement 31 nicht mehr sichtbar und eine entsprechende Verschleißstufe erreicht.

Figur 9b zeigt einen Querschnittsverlauf in Umfangsrichtung der Laufradkomponente 1. Die Vertiefung des Aeroelementes 10 erstreckt sich in Umfangsrichtung der Laufradkomponente 1 über eine Gesamtlänge 14a von 7 mm, wobei die Vertiefung hier am rechten Ende zunächst leicht abgerundet ist und dann in eine Neigung 24a der Seite 24 von etwa 9° übergeht. Es ergibt sich eine effektive oder praktische Länge 14 von 6 mm. Die Vertiefung 11 erstreckt sich über eine Länge 14b in Umfangsrichtung mit einer Tiefe, die größer ist als die halbe maximale Tiefe 15. Die Länge 14b ist vorzugsweise größer als 50% der Länge 14 oder insbesondere auch der Gesamtlänge 14a. Die Länge 14b beträgt vorzugsweise wenigstens 2,5 mm und insbesondere 3 mm oder mehr. Eine maximale Tiefe erreicht das Aeroelement hier über eine Länge 14c, die etwa 1/3 oder mehr der Länge 14 beträgt, insbesondere zwischen 20% und 40% der Länge 14.

Figur 10 zeigt einen radial äußeren Quadranten des Querschnitts des Reifens, wobei neben dem Reifenprofil auch noch der Verlauf einer idealen Ellipse 8 mit den Halbachsen 8a und 8b eingezeichnet ist. Hier ist klar erkennbar, dass im Bereich der gestrichelten Winkel von 45° und 60° zur zentralen Längsschnittebene 4 die Außenoberfläche des Reifens 2 radial innerhalb des Ellipsenverlaufs 8 verläuft. Der radiale Unterschied ist klein und beträgt vorzugsweise an jedem Winkel weniger als 1 mm. Figur 10 zeigt weiterhin noch eine eingebettete Indikatoreinheit 30 mit einem Indikatorelement, welches hier durch ein Indikatormaterial 34 gebildet wird. Bei dem Abfahren der zentralen Lauffläche 3a wird vornehmlich im Bereich der Längsschnittebene die Wandstärke dünner und der mittlere Bereich des Reifens flacht ab. Schließlich ist das Material des Reifens 2 soweit abgefahren, dass das eingebettete Indikatormaterial 34 sichtbar wird. Dadurch wird klar angezeigt, dass eine bestimmte Verschleißstufe erreicht ist. Unterschiedliche Verschleißstufen können durch unterschiedlich farbige Indikatormaterialen 34 angezeigt werden.

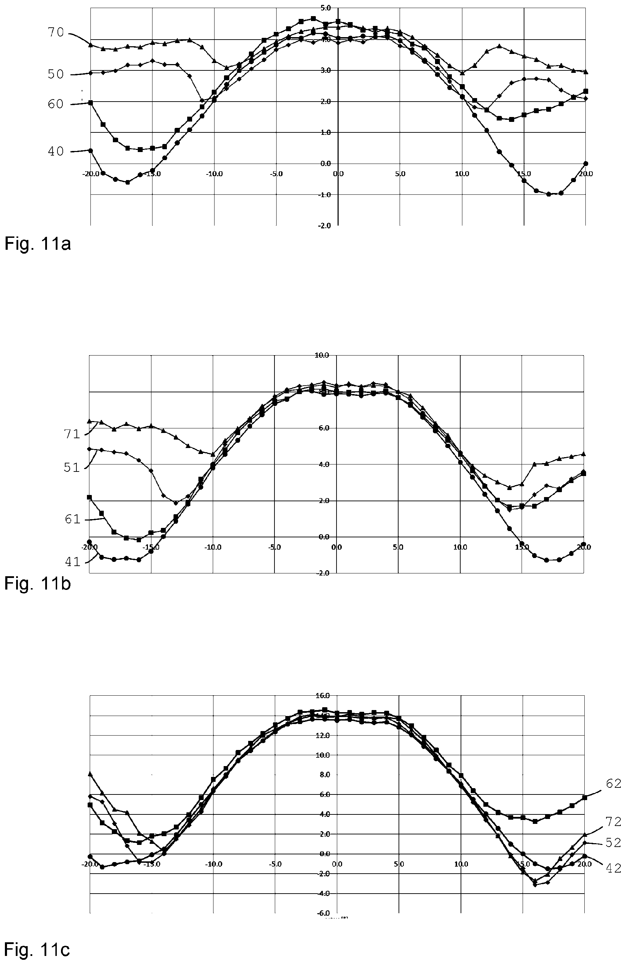

Die Figuren 11a bis 11c zeigen Messergebnisse aus dem Windkanal mit der erfindungsgemäßen Laufradkomponente 1 und mehreren unterschiedlichen Wettbewerbsprodukten, wobei jeweils die gleiche Felge verwendet wurde.

Dabei zeigen in den Figuren 11a bis 11c die Kurvenverläufe 40, 41 und 42 jeweils den Messverlauf für die erfindungsgemäße Laufradkomponente 1.

In Figur 11a ist die benötigte aerodynamische Leistung in Watt über dem Anströmwinkel in Grad für die unterschiedlichen Laufradkomponenten abgebildet. Dabei ist klar erkennbar, dass die erfindungsgemäße Laufradkomponente 1 bei der Geschwindigkeit von 30 km/h schon bei Winkeln von 15° bis 20° einen ausgeprägten Segeleffekt produziert und auch bei Anströmung von vorn hervorragende Ergebnisse liefert. Die Kurven 50, 60 und 70 der Wettbewerbsprodukte zeigen mit gleichen Reifenbreiten alle keinen Segeleffekt und somit keine Unterstützung und Vortrieb bei leicht schrägen Anströmwinkeln. Um im Windkanal gemessene Werte besser vergleichen zu können, sind die Werte vorzugsweise auf eine definierte Referenzdichte umgerechnet.

Wie Figur 11b zeigt, behält die erfindungsgemäße Laufradkomponente 1 ihre Vorteile auch bei einer Fahrgeschwindigkeit bzw. Relativgeschwindigkeit von 37,5 km/h. Aufgetragen ist hier wieder die aerodynamische Leistung über dem Anströmwinkel bei verschiedenen Konkurrenzprodukten. Die Kurve 41 zeigt den Verlauf der erfindungsgemäßen Laufradkomponente 1. Es ist erkennbar, dass bei der Geschwindigkeit von 37,5 km/h die erfindungsgemäße Laufradkomponente 1 einen sehr vorteilhaften Segeleffekt und somit eine positive Unterstützung zeigt, während auch im zentralen Bereich der Anströmung hervorragende Windkanalergebnisse gebracht werden. Einen Segeleffekt zeigt konkret keines der Wettbewerbsprodukte.

Bei den Relativgeschwindigkeiten von 30 km/h und 37,5 km/h werden die besten Ergebnisse mit der erfindungsgemäßen Laufradkomponente 1 erzielt. Das gilt praktisch für alle Winkelbereiche. Der erreichbare Segeleffekt gibt Vortrieb und unterstützt den Fahrer.

Ebenso zeigt Figur 11c hervorragende Ergebnisse für die erfindungsgemäße Laufradkomponente 1 (Kurve 42) bei der nun höheren Relativgeschwindigkeit von 45 km/h. Erst bei dieser relativ hohen Relativgeschwindigkeit erreichen auch einige Konkurrenzprodukte Segeleffekte. Die Erfindung liefert aber auch hier über weite Bereiche die mit Abstand besten Ergebnisse.

Ein erheblicher Vorteil der vorliegenden Erfindung ist auch, dass der Segeleffekt nicht nur bei hohen, sondern auch bei erheblich kleineren Geschwindigkeiten schon zutage tritt.

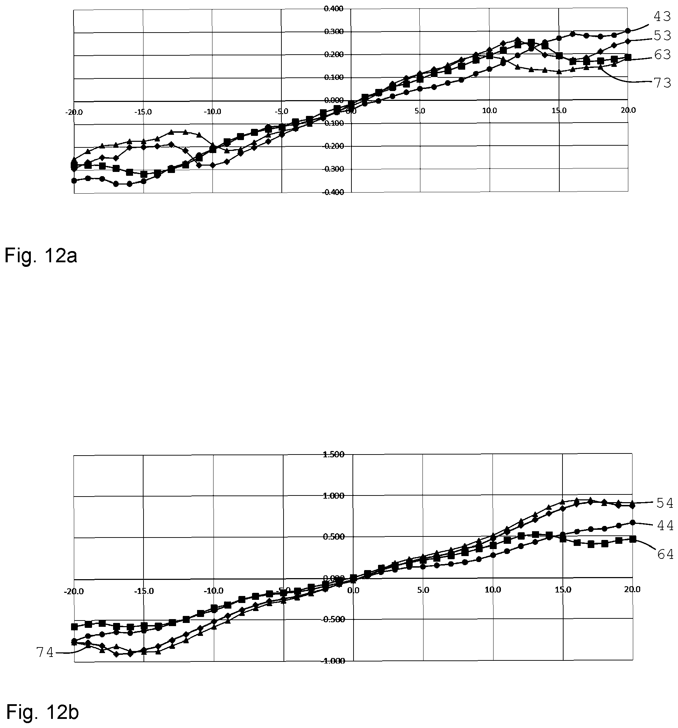

Die Messkurven aus den Figuren 12a und 12b zeigen das benötigte Lenkmoment über dem Anströmwinkel bei 30 km/h (Figur 12a) und bei 45 km/h (Figur 12b). Es ist insbesondere bei den höheren Geschwindigkeiten in Figur 12b sehr gut erkennbar, dass keine negativen Auswirkungen auf das Lenkmoment erzielt werden. Dabei ist auch der unterschiedliche Maßstab in Y-Richtung zwischen Figur 12a und 12b zu beachten.

Insgesamt zeigt die vorliegende Erfindung, dass deutliche Verbesserungen hinsichtlich der Aerodynamik erzielt werden. Nicht nur bei hohen Geschwindigkeiten, sondern auch schon bei relativ niedrigen Geschwindigkeiten von 30 km/h können deutliche Segeleffekte erzielt werden. Da der Reifen die anströmende Luft gezielt und weder zu stark noch zu schwach verwirbelt, kann der positive Effekt mit unterschiedlichen Felgen erzielt werden.

Die Kurven 40, 41, 42, 43 und 44 gehören zur erfindungsgemäßen Laufradkomponente 1. Die Kurven 50, 51, 52, 53 und 54 gehören zu einem ersten Konkurrenzprodukt, die Kurven 60, 61, 62, 63 und 64 zu einem zweiten Konkurrenzprodukt, die Kurven 70, 71, 72, 73 und 74 zu einem dritten Konkurrenzprodukt.

Insgesamt stellt die Erfindung einen vorteilhaften Reifen und eine vorteilhafte Laufradkomponente zur Verfügung.

**Bezugszeichenliste:**

| | | | |
|---|---|---|---|
| 1 | Laufradkomponente | 24 | geneigte Seitenwand |
| 2 | Reifen | 24a | Winkel |
| 2a | Breite | 25 | maximaler |
| 2b | Reifenwulst | | Höhenunterschied |
| 2c | Weite | 26 | axialer Abstand |
| 2d | Verstärkungsring | 30 | Indikatoreinheit |
| 2e | Schlauchreifen | 31 | Indikatorelement |
| 3 | Lauffläche | 31a | Verschleißstufe |
| 3a | Winkelsegment | 32 | Indikatorelement |
| 4 | Längsschnittebene | 32a | Verschleißstufe |
| 4a, 4b | Seite | 33 | Indikatorelement |
| 5 | Oberfläche von 2 | 33a | Verschleißstufe |
| 6 | Umfangsrichtung | 34 | Indikatormaterial |
| 6a | Rotationsrichtung | 40-44 | Messkurve |
| 6b | Vorwärtsfahrtrichtung | 50-54 | Messkurve |
| 7 | Typangabe | 62-64 | Messkurve |
| 8 | Ellipsenform | 70-74 | Messkurve |
| 8a | radiale Halbachse | 80 | Messkurve |
| 8b | axiale Halbachse | 100 | Fahrrad |
| 9a, 9b | Seitenfläche | 101 | Rad, Vorderrad |
| 10 | Aeroelement | 102 | Rad, Hinterrad |
| 10a,b | Winkelband | 103 | Rahmen |
| 11 | Vertiefung | 104 | Gabel |
| 12 | Erhebung | 105 | Tretkurbeleinheit |
| 13 | Abstand in Umfangsrichtung | 106 | Lenker |
| | | 107 | Sattel |
| 13a | Versatz | 108 | Nabe |
| 14 | Länge in Umfangsrichtung | 109 | Speiche |
| 14a | Gesamtlänge | 110 | Felge |
| 14b | Länge | 111 | Felgenflanke |
| 14c | Länge | 112 | maximale Breite von 110 |
| 15 | radiale Erstreckung, Tiefe, Höhe | 113 | Felgenboden |
| | | 114 | Oberfläche |
| 16 | äußere Oberfläche von 10 | 115 | Felgenhorn |
| 17 | maximale Ausdehnung | 116 | Felgenbett |
| 18 | minimale Ausdehnung | 117 | Maulweite |
| 19 | Länge in Querrichtung | 118 | Felgenhöhe |
| 20 | Struktur | 119 | Höhe |
| 21-23 | Seitenwand | 120 | ebener Untergrund |

## Patentansprüche

1. Laufradkomponente (1) für wenigstens teilweise muskelbetriebene Sport- und Rennräder (100) mit einem ringförmigen Reifen (2) und einer in einem zentralen Winkelsegment (3a) ausgebildeten Lauffläche (3) und sich seitlich daran anschließenden Seitenflächen, wobei die Lauffläche (3) im bestimmungsgemäßen Gebrauch bei einer Geradeausfahrt auf einem ebenen Untergrund (120) wenigstens teilweise in Kontakt mit der Oberfläche des Untergrundes (120) gerät und eine Längsschnittebene (4) aufspannt,
wobei an der Oberfläche (5) des ringförmigen Reifens (2) Aeroelemente (10) ausgebildet sind,
wobei die Aeroelemente (10) jeweils flächig als Vertiefung (11) in der Oberfläche (5) des Reifens (2) ausgebildet und auf den Seitenflächen (9a, 9b) angeordnet sind und auf den Seitenflächen (9a, 9b) umlaufende Winkelbänder (10a, 10b) definieren, wobei ein Winkelband als Ring ausgebildet ist, welches radial innen und radial außen durch die radiale Ausdehnung der Aeroelemente definiert wird,
**dadurch gekennzeichnet,**
**dass** ein Flächenanteil der Aeroelemente (10) an der Fläche eines Winkelbandes größer 5% und kleiner 25% beträgt,
und **dass** wenigstens ein Aeroelement (10) eine kantige Struktur (20) aufweist, bei der wenigstens zwei in Radialrichtung verlaufende Seitenwände (21, 22, 23) einen Winkel zur Oberfläche (5) größer 60° aufweisen und wobei wenigstens eine in Umfangsrichtung (6) verlaufende geneigte Seitenwand (24) ausgebildet ist, die im Wesentlichen einen Winkel von weniger als 45° zur Oberfläche (5) aufweist.

2. Laufradkomponente (1) nach dem vorhergehenden Anspruch, wobei ein Flächenanteil der Aeroelemente (10) an der im bestimmungsgemäßen Gebrauch sichtbaren Oberfläche des Reifens insgesamt größer 2% und weniger als 8% beträgt und wobei jedes Aeroelement zwischen 0,01% und 0,1% der im bestimmungsgemäßen Gebrauch sichtbaren Oberfläche des Reifens (2) umfasst.

3. Laufradkomponente (1) nach einem der vorhergehenden Ansprüche, wobei die Aeroelemente (10) jeweils eine kompakte und kantige Struktur (20) aufweisen und wobei wenigstens zwei Seitenwandabschnitte (21, 23) des Aeroelements (10) in radialer Richtung (15) steil ausgebildet sind.

4. Laufradkomponente (1) nach einem der vorhergehenden Ansprüche, wobei ein maximaler Höhenunterschied eines Aeroelementes zur umgebenden Oberfläche wenigstens zweimal so groß ist wie ein maximaler Höhenunterschied innerhalb des Winkelbandes (10, 10b) außerhalb der Aeroelemente (10) und wobei die Lauffläche (3) und die Oberfläche des Winkelbandes (10a, 10b) abgesehen von den Aeroelementen (10) profillos ausgebildet ist und/oder wobei die Oberfläche (5) des Reifens (2) abgesehen von den Aeroelementen (10) im bestimmungsgemäßen Gebrauch vorzugsweise weitestgehend glatt ausgebildet ist.

5. Laufradkomponente (1) nach einem der vorhergehenden Ansprüche, wobei an der Oberfläche (5) des ringförmigen Reifens (2) insgesamt mehr als 20 und weniger als 200 Aeroelemente (10) ausgebildet sind.

6. Laufradkomponente nach dem vorhergehenden Anspruch, wobei auf beiden Seiten (4a, 4b) der Längsschnittebene (4) Aeroelemente (10) ausgebildet sind und wobei wenigstens zwei axial benachbarte Aeroelemente (10) auf den beiden Seiten (4a, 4b) der Längsschnittebene (4) in Umfangsrichtung (6) versetzt zueinander ausgerichtet sind.

7. Laufradkomponente (1) nach einem der vorhergehenden Ansprüche, wobei wenigstens ein Aeroelement (10) eine radiale Erstreckung (15) zwischen 0,40 mm und 2 mm aufweist und wobei wenigstens ein Aeroelement (10) eine Länge (19) auf der Oberfläche (5) quer zu dem Umfang der Lauffläche (3) zwischen 3 mm und 15 mm und eine Länge (14) auf der Oberfläche (5) in Umfangsrichtung (6) zwischen 3 mm und 15 mm aufweist.

8. Laufradkomponente (1) nach einem der vorhergehenden Ansprüche, wobei wenigstens ein Aeroelement (10) eine taschen-, topf- oder wannenartige Struktur (20) aufweist und wobei wenigstens ein Aeroelement (10) eine radial äußere Oberfläche (16) auf dem Reifen (2) zwischen 15 Quadratmillimeter und 100 Quadratmillimeter aufweist.

9. Laufradkomponente (1) nach einem der vorhergehenden Ansprüche, wobei wenigstens ein Aeroelement (10) eine kompakte Struktur (20) aufweist, bei der ein Verhältnis von maximaler Ausdehnung (17) zu minimaler Ausdehnung (18) auf der Oberfläche (5) des Reifens (2) kleiner 5 oder kleiner 3 beträgt und wobei insbesondere ein Verhältnis von maximaler Länge (14) in Umfangsrichtung der Lauffläche zu maximaler Länge (19) in Querrichtung zwischen 1/3 und 3 beträgt.

10. Laufradkomponente (1) nach einem der beiden vorhergehenden Ansprüche, wobei wenigstens ein Aeroelement (10) eine kantige Struktur (20) aufweist, bei der wenigstens zwei in Radialrichtung verlaufende Seitenwände (21, 22, 23) einen Winkel zur Oberfläche (5) größer 75° aufweisen und wobei wenigstens eine in Umfangsrichtung (6) verlaufende geneigte Seitenwand (24) ausgebildet ist, die im Wesentlichen einen Winkel von weniger als 45° zur Oberfläche (5) aufweist.

11. Laufradkomponente (1) nach einem der vorhergehenden Ansprüche, wobei sich die zentrale Lauffläche (3) über ein Winkelsegment (3a) von mehr als 20° und weniger als 70° quer zur Umfangsrichtung (6) der Lauffläche (3) erstreckt und wobei sich die Aeroelemente (10) auf jeder Seite (4a, 4b) in einem Winkelband (10a, 10b) von weniger als 45° Breite erstrecken.

12. Laufradkomponente nach einem der vorhergehenden Ansprüche, wobei der Reifen (2) im Wesentlichen oval ausgebildet ist und eine radiale Halbachse (8a) aufweist, die größer ist als eine axiale Halbachse (8b),
wobei ein Verhältnis der radialen Halbachse (8a) zu der axialen Halbachse (8b) zwischen 1 und 1,25.

13. Laufradkomponente (1) nach einem der vorhergehenden Ansprüche, wobei auf dem Umfang der Lauffläche (3) wenigstens eine Indikatoreinheit (30) ausgebildet ist, um ein aerodynamisches Qualitätsmaß des Reifens (2) anzuzeigen und wobei die Indikatoreinheit (30) dazu geeignet und ausgebildet ist, unterschiedliche Verschleißstufen (31a-33a) anzuzeigen und wobei insbesondere bei Erreichen einer vorbestimmten Verschleißstufe (31a) die aerodynamischen Eigenschaften bei Verwendung an einem Vorderrad (101) unter ein vorbestimmtes Maß abgesunken sind und wobei bei Erreichen einer vorbestimmten weiteren Stufe (32a) die aerodynamischen Eigenschaften bei Verwendung an einem Hinterrad (102) unter ein vorbestimmtes Maß abgesunken sind.

14. Laufradkomponente (1) nach einem der vorhergehenden Ansprüche, umfassend eine Felge (110) mit einer im Wesentlichen glatten Oberfläche (114) ohne Verwirbelungselemente, auf der der Reifen (2) montierbar ist, und wobei die Felge (111) eine maximale Breite (112) größer 2/3 und kleiner 4/3 der maximalen Breite (2a) des Reifens (2) aufweist.

15. Laufradkomponente (1) für wenigstens teilweise muskelbetriebene Sport- und Rennräder (100) mit einem ringförmigen Reifen (2) und einer in einem zentralen Winkelsegment (3a) ausgebildeten Lauffläche (3) und sich seitlich daran anschließenden Seitenflächen, wobei die Lauffläche (3) im bestimmungsgemäßen Gebrauch bei einer Geradeausfahrt auf einem ebenen Untergrund (120) wenigstens teilweise in Kontakt mit der Oberfläche des Untergrundes (120) gerät und eine Längsschnittebene (4) aufspannt,
wobei an der Oberfläche (5) des ringförmigen Reifens (2) Aeroelemente (10) ausgebildet sind,
wobei die Aeroelemente (10) jeweils flächig als Vertiefung (11) in der Oberfläche (5) des Reifens (2) ausgebildet und auf den Seitenflächen (9a, 9b) angeordnet sind und auf den Seitenflächen (9a, 9b) umlaufende Winkelbänder (10a, 10b) definieren, wobei ein Winkelband als Ring ausgebildet ist, welches radial innen und radial außen durch die radiale Ausdehnung der Aeroelemente definiert wird,
**dadurch gekennzeichnet,**
**dass** ein Flächenanteil der Aeroelemente (10) an der Fläche eines Winkelbandes größer 5% und kleiner 25% beträgt,
und wobei ein maximaler Höhenunterschied eines Aeroelementes zur umgebenden Oberfläche wenigstens zweimal so groß ist wie ein maximaler Höhenunterschied innerhalb des Winkelbandes (10, 10b) außerhalb der Aeroelemente (10) und wobei die Lauffläche (3) und die Oberfläche des Winkelbandes (10a, 10b) abgesehen von den Aeroelementen (10) profillos ausgebildet ist.

## Claims

1. Wheel component (1) for at least partially muscle-powered sports and racing bicycles, with an annular tire (2) and a tread surface (3) configured in a central triangle segment (3a) and in laterally adjacent side surfaces, wherein the tread surface (3) in proper use in straight-ahead travel on a plane ground (120) makes at least partial contact with the surface of the ground (120), opening up a longitudinal sectional plane (4), wherein aero elements (10) are configured on the surface (5) of the annular tire (2), wherein the aero elements (10) are each configured planar as a depression (11) in the surface (5) of the tire (2) and are disposed on the side surfaces (9a, 9b), and define circumferential angular bands (10a, 10b) on the side surfaces (9a, 9b), wherein an angular band is configured as a ring, which is defined radially inwardly and radially outwardly by the radial extension of the aero elements,
**characterized in**
**that** the surface proportion of the aero elements (10) to the surface of an angular band is more than 5% and less than 25%, and that at least one aero element (10) shows an angular structure (20), wherein at least two side walls (21, 22, 23) extending in the radial direction show an angle to the surface (5) of more than 60°, and wherein at least one inclined side wall (24) extending in the peripheral direction (6) is configured, which substantially shows an angle of less than 45° to the surface (5).

2. The wheel component (1) according to the preceding claim,
wherein the surface proportion of the aero elements (10) to the surface of the tire that is visible in proper use, is on the whole more than 2% and less than 8%, and wherein each aero element comprises between 0.01% and 0,1% of the surface of the tire (2) visible in proper use.

3. The wheel component (1) according to any of the preceding claims, wherein the aero elements (10) each show a compact and angular structure (20), and wherein at least two side wall sections (21, 23) of the aero element (10) are configured steep in the radial direction (15).

4. The wheel component (1) according to any of the preceding claims, wherein the maximum height difference of an aero element to the surrounding surface is at least twice the maximum height difference within the angular band (10, 10b) outside of the aero elements, and wherein the tread surface (3) and the surface of the angular band (10a, 10b) is configured without profile, except for the aero elements (10), and/or wherein, except for the aero elements (10), the surface (5) of the tire (2) in proper use is preferably configured largely smooth.

5. The wheel component (1) according to any of the preceding claims, wherein a total of more than 20 and less than 200 aero elements (10) are configured on the surface (5) of the annular tire (2).

6. The wheel component according to the preceding claim, wherein aero elements (10) are configured on both sides (4a, 4b) of the longitudinal sectional plane (4), and wherein on the two sides (4a, 4b) of the longitudinal sectional plane (4), at least two axially adjacent aero elements (10) are disposed offset to one another in the peripheral direction (6).

7. The wheel component (1) according to any of the preceding claims, wherein at least one aero element (10) shows a radial extension (15) between 0.40 mm and 2 mm, and wherein at least one aero element (10) shows, on the surface (5) transverse to the circumference of the tread surface (6), a length (19) between 3 mm and 15 mm, and a length (14) on the surface (5) in the peripheral direction (6), between 3 mm and 15 mm.

8. The wheel component (1) according to any of the preceding claims, wherein at least one aero element (10) shows a pouch-, pot- or basin-like structure (20), and wherein at least one aero element (10) shows a radially outwardly surface (16) on the tire (2) between 15 square millimeters and 100 square millimeters.

9. The wheel component (1) according to any of the preceding claims, wherein at least one aero element (10) shows a compact structure (20), wherein the ratio of the maximum extension (17) to the minimum extension (18) on the surface (5) of the tire (2) is less than 5 or less than 3, and wherein in particular the ratio of the maximum length (14) in the peripheral direction of the tread surface to the maximum length (19) in the transverse direction is between 1/3 and 3.

10. The wheel component (1) according to any of the two preceding claims, wherein at least one aero element (10) shows an angular structure (20), wherein at least two side walls (21, 22, 23) extending in the radial direction show an angle to the surface (5) of more than 75°, and wherein at least one inclined side wall (24) extending in the peripheral direction (6) is configured, which substantially shows an angle of less than 45° to the surface (5).

11. The wheel component (1) according to any of the preceding claims, wherein the central tread surface (3) extends over a triangle segment (3a) of more than 20° and less than 70° transverse to the peripheral direction (6) of the tread surface (3), and wherein the aero elements (10) extend on each side (4a, 4b) in an angular band (10a, 10b) of less than 45° width.

12. The wheel component according to any of the preceding claims, wherein the tire (2) is substantially configured oval and has a radial semiaxis (8a) that is larger than the axial semiaxis (8b), wherein the ratio of the radial semiaxis (8a) to the axial semiaxis (8b) is between 1 and 1.25.

13. The wheel component (1) according to any of the preceding claims, wherein at least one indicator unit (30) is configured on the circumference of the tread surface (3) to indicate an aerodynamic quality degree of the tire (2), and wherein the indicator unit (30) is suitable and configured to indicate different wear stages (31a-33a), and wherein, in particular as a predetermined wear stage (31a) is reached, the aerodynamic properties have dropped beneath a predetermined degree when used on a front wheel (101), and wherein as a further, predetermined stage (32a) is reached, the aerodynamic properties have dropped beneath a predetermined degree when used on a rear wheel (102).

14. The wheel component (1) according to any of the preceding claims, comprising a rim (110) with a substantially smooth surface (114) without whirling elements, on which the tire (2) can be mounted, and wherein the rim (111) shows a maximum width (112) of more than 2/3 and less than 4/3 of the maximum width (2a) of the tire (2).

15. Wheel component (1) for at least partially muscle-powered sports and racing bicycles, with an annular tire (2) and a tread surface (3) configured in a central triangle segment (3a) and in laterally adjacent side surfaces, wherein the tread surface (3) in proper use in straight-ahead travel on a plane ground (120) makes at least partial contact with the surface of the ground (120), opening up a longitudinal sectional plane (4), wherein aero elements (10) are configured on the surface (5) of the annular tire (2), wherein the aero elements (10) are each configured planar as a depression (11) in the surface (5) of the tire (2) and are disposed on the side surfaces (9a, 9b), and define circumferential angular bands (10a, 10b) on the side surfaces (9a, 9b), wherein an angular band is configured as a ring, which is defined radially inwardly and radially outwardly by the radial extension of the aero elements,
**characterized in**
**that** the surface proportion of the aero elements (10) to the surface of an angular band is more than 5% and less than 25%, and wherein the maximum height difference of an aero element to the surrounding surface is at least twice the maximum height difference within the angular band (10, 10b) outside of the aero elements, and wherein the tread surface (3) and the surface of the angular band (10a, 10b) are configured without profile, except for the aero elements (10).

## Revendications

1. Composant de roue (1) pour des vélos de sport et de course (100) à propulsion au moins partiellement musculaire, avec un pneu annulaire (2) et une surface de roulement (3) réalisée dans un segment angulaire central (3a) et des surfaces latérales s'y raccordant latéralement, la surface de roulement (3) entrant au moins partiellement en contact avec la surface du sol (120) lors d'une utilisation conforme à celle qui est prévue, lors d'un déplacement en ligne droite sur un sol plat (120), et définissant un plan de coupe longitudinal (4),
des éléments aérodynamiques (10) étant formés sur la surface (5) du pneu annulaire (2),
les éléments aérodynamiques (10) étant respectivement réalisés à plat sous forme de creux (11) dans la surface (5) du pneu (2) et étant disposés sur les surfaces latérales (9a, 9b) et définissant des bandes angulaires (10a, 10b) périphériques sur les surfaces latérales (9a, 9b), une bande angulaire étant réalisée sous forme d'anneau, qui est défini radialement à l'intérieur et radialement à l'extérieur par l'extension radiale des éléments aérodynamiques,
**caractérisé en ce que** :
une part de surface des éléments aérodynamiques (10) dans la surface d'une bande angulaire est supérieure à 5% et inférieure à 25%,
et **en ce qu'**au moins un élément aérodynamique (10) présente une structure angulaire (20), dans laquelle au moins deux parois latérales (21, 22, 23), s'étendant dans la direction radiale, présentent un angle par rapport à la surface (5) supérieur à 60° et au moins une paroi latérale inclinée (24), s'étendant dans la direction périphérique (6), est réalisée, laquelle présente essentiellement un angle inférieur à 45° par rapport à la surface (5).

2. Composant de roue (1) selon la revendication précédente, dans lequel un pourcentage de surface des éléments aérodynamiques (10) par rapport à la surface visible du pneu en utilisation conforme à celle qui est prévue, est globalement supérieur à 2% et inférieur à 8% et dans lequel chaque élément aérodynamique comprend entre 0,01% et 0,1% de la surface visible du pneu (2) en utilisation conforme à celle qui est prévue.

3. Composant de roue (1) selon l'une des revendications précédentes, dans lequel les éléments aérodynamiques (10) présentent chacun une structure compacte et angulaire (20) et dans lequel au moins deux portions de paroi latérale (21, 23) de l'élément aérodynamique (10) sont réalisées avec une forte pente dans la direction radiale (15).

4. Composant de roue (1) selon l'une des revendications précédentes, dans lequel une différence de hauteur maximale d'un élément aérodynamique par rapport à la surface environnante est au moins deux fois plus grande qu'une différence de hauteur maximale à l'intérieur de la bande angulaire (10, 10b) à l'extérieur des éléments aérodynamiques (10), et dans lequel la surface de roulement (3) et la surface de la bande angulaire (10a, 10b) sont réalisées sans profil, à l'exception des éléments aérodynamiques (10), et/ou dans lequel la surface (5) du pneu (2) est réalisée de préférence de manière largement lisse, à l'exception des éléments aérodynamiques (10), dans le cadre d'une utilisation conforme à celle qui est prévue.

5. Composant de roue (1) selon l'une des revendications précédentes, dans lequel plus de 20 et moins de 200 éléments aérodynamiques (10) sont formés au total sur la surface (5) du pneu annulaire (2).

6. Composant de roue selon la revendication précédente, dans lequel des éléments aérodynamiques (10) sont formés de part et d'autre (4a, 4b) du plan de coupe longitudinal (4) et dans lequel au moins deux éléments aérodynamiques (10) axialement voisins sont orientés de manière décalée l'un par rapport à l'autre dans la direction circonférentielle (6) sur les deux côtés (4a, 4b) du plan de coupe longitudinal (4).

7. Composant de roue (1) selon l'une des revendications précédentes, dans lequel au moins un élément aérodynamique (10) a une extension radiale (15) comprise entre 0,40 mm et 2 mm,
et dans lequel au moins un élément aérodynamique (10) présente une longueur (19) sur la surface (5) transversale à la circonférence de la surface de roulement (3) comprise entre 3 mm et 15 mm et une longueur (14) sur la surface (5) dans la direction circonférentielle (6) comprise entre 3 mm et 15 mm.

8. Composant de roue (1) selon l'une quelconque des revendications précédentes, dans lequel au moins un élément aérodynamique (10) a une structure en forme de poche, de pot ou de cuvette (20) et dans lequel au moins un élément aérodynamique (10) a une surface radialement extérieure (16) sur le pneu (2) comprise entre 15 millimètres carrés et 100 millimètres carrés.

9. Composant de roue (1) selon l'une quelconque des revendications précédentes, dans lequel au moins un élément aérodynamique (10) présente une structure compacte (20) dans laquelle un rapport entre l'étendue maximale (17) et l'étendue minimale (18) sur la surface (5) du pneumatique (2) est inférieur à 5 ou inférieur à 3, et en particulier dans lequel un rapport entre la longueur maximale (14) dans la direction circonférentielle de la surface de roulement et la longueur maximale (19) dans la direction transversale est compris entre 1/3 et 3.

10. Composant de roue (1) selon l'une des deux revendications précédentes, dans lequel au moins un élément aérodynamique (10) présente une structure angulaire (20), dans laquelle au moins deux parois latérales (21, 22, 23) s'étendant dans la direction radiale présentent un angle par rapport à la surface (5) supérieur à 75° et dans lequel au moins une paroi latérale inclinée (24) s'étendant dans la direction périphérique (6) est réalisée, laquelle présente essentiellement un angle inférieur à 45° par rapport à la surface (5).

11. Composant de roue (1) selon l'une quelconque des revendications précédentes, dans lequel la surface de roulement centrale (3) s'étend sur un segment angulaire (3a) de plus de 20° et de moins de 70° transversalement à la direction circonférentielle (6) de la surface de roulement (3), et dans lequel les éléments aérodynamiques (10) s'étendent de chaque côté (4a, 4b) dans une bande angulaire (10a, 10b) de largeur inférieure à 45°.

12. Composant de roue selon l'une quelconque des revendications précédentes, dans lequel le pneumatique (2) est de forme sensiblement ovale et présente un demi-axe radial (8a) supérieur à un demi-axe axial (8b),
un rapport entre le demi-axe radial (8a) et le demi-axe axial (8b) étant compris entre 1 et 1,25.

13. Composant de roue (1) selon l'une quelconque des revendications précédentes, dans lequel au moins une unité indicatrice (30) est formée sur la périphérie de la surface de roulement (3) pour indiquer une mesure de qualité aérodynamique du pneumatique (2), et dans lequel l'unité indicatrice (30) est adaptée et configurée pour indiquer différents niveaux d'usure (31a-33a),
et dans lequel, en particulier, lorsqu'un niveau d'usure prédéterminé (31a) est atteint, les propriétés aérodynamiques sont tombées en dessous d'une mesure prédéterminée lorsqu'elles sont utilisées sur une roue avant (101) et dans lequel, lorsqu'un autre niveau prédéterminé (32a) est atteint, les propriétés aérodynamiques sont tombées en dessous d'une mesure prédéterminée lorsqu'elles sont utilisées sur une roue arrière (102).

14. Composant de roue (1) selon l'une quelconque des revendications précédentes, comprenant une jante (110) avec une surface sensiblement lisse (114) sans éléments de turbulence, sur laquelle le pneu (2) peut être monté, et dans lequel la jante (111) présente une largeur maximale (112) supérieure à 2/3 et inférieure à 4/3 de la largeur maximale (2a) du pneu (2).

15. Composant de roue (1) pour des vélos de sport et de course (100) au moins partiellement musclés, comprenant un pneu annulaire (2) et une surface de roulement (3) formée dans un segment angulaire central (3a) et des surfaces latérales s'y raccordant latéralement, la surface de roulement (3) entrant au moins partiellement en contact avec la surface du sol (120) lors d'une utilisation conforme à celle qui est prévue lors d'un déplacement en ligne droite sur un sol plat (120) et définissant un plan de coupe longitudinal (4),
des éléments aérodynamiques (10) étant formés sur la surface (5) du pneu annulaire (2),
les éléments aérodynamiques (10) étant respectivement réalisés à plat sous forme de creux (11) dans la surface (5) du pneu (2) et étant disposés sur les surfaces latérales (9a, 9b) et définissant des bandes angulaires (10a, 10b) périphériques sur les surfaces latérales (9a, 9b), une bande angulaire étant réalisée sous forme d'anneau, qui est défini radialement à l'intérieur et radialement à l'extérieur par l'extension radiale des éléments aérodynamiques,
**caractérisé en ce que** :
une part de surface des éléments aérodynamiques (10) dans la surface d'une bande angulaire est supérieure à 5% et inférieure à 25%,
et dans lequel une différence de hauteur maximale d'un élément aérodynamique par rapport à la surface environnante est au moins deux fois plus grande qu'une différence de hauteur maximale à l'intérieur de la bande angulaire (10, 10b) à l'extérieur des éléments aérodynamiques (10) et dans lequel la surface de roulement (3) et la surface de la bande angulaire (10a, 10b) sont réalisées sans profil, à l'exception des éléments aérodynamiques (10).
